(19) **Europäisches Patentamt**
**European Patent Office**
**Office européen des brevets**

(11) **EP 2 459 313 B1**

(12) **EUROPEAN PATENT SPECIFICATION**

(45) Date of publication and mention
of the grant of the patent:
**18.03.2015 Bulletin 2015/12**

(51) Int Cl.:
**B01L 3/00** *(2006.01)* **B01L 9/00** *(2006.01)*
**G01N 35/10** *(2006.01)*

(21) Application number: **10739984.2**

(22) Date of filing: **30.07.2010**

(86) International application number:
**PCT/GB2010/051259**

(87) International publication number:
**WO 2011/012905 (03.02.2011 Gazette 2011/05)**

(54) **MEANS FOR IMPROVED LIQUID HANDLING IN A MICROPLATE**

VORRICHTUNG FÜR VERBESSERTES LIQUID-HANDLING BEI EINER MIKROPLATTE

MOYEN POUR MANIPULATION DE LIQUIDE AMÉLIORÉE DANS UNE MICROPLAQUE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **31.07.2009 GB 0913313**
**31.07.2009 GB 0913315**

(43) Date of publication of application:
**06.06.2012 Bulletin 2012/23**

(73) Proprietor: **Oxley Hughes Limited
Leicester
LE4 7SL (GB)**

(72) Inventor: **STAFFORD, Simon
Bury St. Edmunds, Suffolk IP32 7LN (GB)**

(74) Representative: **Gill, Siân Victoria et al
Venner Shipley LLP
200 Aldersgate
London EC1A 4HD (GB)**

(56) References cited:
**EP-A1- 1 854 542          EP-A2- 0 483 620
WO-A1-2006/014452     WO-A2-2004/091746
DE-A1- 10 200 541       DE-U1- 20 307 590
US-A- 4 559 664          US-A- 5 380 493
US-A- 5 972 694          US-A1- 2004 200 509
US-A1- 2007 202 018   US-A1- 2009 010 811**

EP 2 459 313 B1

## Description

### Field of Invention

The present invention relates to a means for improving fluid exchange when using microplates. More specifically, the invention relates to a microplate which comprises one or more internal modifications which aid the introduction and removal of fluids from the wells of the plate and minimize the damage caused to biological media located within the well, such as cells growing therein, upon introduction or removal of a pipette tip and/or fluids from the plate. Alternatively, or in addition, the present invention relates to a means for inclining a microplate at an angle from the horizontal, and retaining the microplate in the inclined position, to facilitate fluid introduction and aspiration from the wells of the microplate.

### Background of the Invention

Microplates (also known as microtitre, microtiter, microtitration or multi-well plates) are a standard laboratory tool, which are used in screening assays, analytical research and diagnostic techniques. Primary applications for microplates include enzyme linked immunosorbent assays (ELISA), cytotoxic assays, protein assays, and many cell-based assays used in high-throughput screening during the drug discovery process.

Microplates are, in effect, small reaction vessels. They are typically small rectangular trays or cassettes that are covered with wells or dimples arranged in orderly rows. These wells are used to conduct separate chemical reactions. The number of wells included in microplates is commonly 6, 12, 24, 48, 96, 384 or 1536, depending upon the size of the microplate and the size of the wells. Additionally, individual rows of microplate wells are available, which can be inserted into a frame to make up a microplate. Typically these rows are provided as a strip of 8 wells (see, for example, http://www.nuncbrand.com/us/page.aspx?ID=12070).

Microplates typically comprise a base plate fixed to an upper plate which comprises a plurality of wells. Each well comprises a wall and a base. The wells are typically arranged in a matrix arrangement of rows and columns. Microplates may be provided with a lid, which fits over the plate to prevent spillage or contamination of the wells and/or to seal the wells.

While some microplates are designed for re-use, and some reactions can be carried out repeatedly in the same microplate, in general, microplates are laboratory consumables, and are disposed of after use.

Microplates are typically made from polymeric plastic materials such as polypropylene, and the most common form of manufacturing process for microplates is injection moulding. In some cases other materials such as glass may be incorporated into the microplate, typically as the base of the well.

While most microplates are of standard manufacture, specialized microplates are available. Clear bottom microplates are ideal for fluorometric applications as well as cell and tissue culture. UV-treated microplates may be used with protein and nucleic acid concentrations, and in research involving DNA testing or sequencing. Fluorescence microplates are available with black or white pigments to reduce background signals or to enhance reflectivity. Luminescent vessels provide high reflectivity, medium binding and low cross talk. Additional designs include microplates that are designed to resist corrosives or solvents.

Microplates can be provided with wells of a certain cross-sectional shape (in vertical view), for example, microplates can have wells that have flat or round bottoms; and wells that have vertical, chamfered or conical walls. US 5,01%,341, which is concerned with increasing the sedimentation rate of particles in agglutination assays, discloses a plate with a well having a bottom surface at least part of which is inclined.

Wells of a microplate are typically filled using a probe (a single probe, used for repeated filling/aspirating; or multiple aligned probes, which can be used to fill/aspirate several wells at the same time) or a pipette.

Pipettes (also called a pipet, pipettor or chemical dropper) can be individual or multi-channel pipettes. Multi-channel pipettes generally comprise 8 or 12 channels, and are used to aspirate fluid from and/or dispense fluid to multiple wells in a microplate simultaneously. For example, when a microplate comprises 96 wells, the wells are typically arranged in 12 columns of 8 wells. An 8-channel, pipette can be used to aspirate fluid from or dispense fluid to an entire column of wells simultaneously, and a 12-channel pipette can be used to aspirate fluid from or dispense fluid to an entire row of wells simultaneously.

Pipettes are available for use in dispensing different volumes of fluid. For example, pipettes are available for dispensing up to 5$\mu$l, 10$\mu$l, 50$\mu$l, 100$\mu$l, 200$\mu$l, 300$\mu$l, 500$\mu$l or 1ml, or 5ml of fluid.

Disposable pipette tips are available for use with each pipette. For example, pipette tips are available for use in dispensing different volumes of fluid, such as 5$\mu$l, 10$\mu$l, 50$\mu$l, 100$\mu$l, 200$\mu$l, 300$\mu$l, 500$\mu$l or 1ml, or 5ml. These disposable pipette tips are of an appropriate size for use with the corresponding pipette. For example, the outer diameter of the point of a 1000$\mu$l pipette tip is approximately 1.5mm, the inner diameter is approximately 0.75mm; the outer diameter of the point of a 200$\mu$l pipette tip is approximately 0.77mm, and the inner diameter is approximately 0.4mm; the outer diameter of the point of a 50$\mu$l pipette tip (typically used with a 'robotic' automated systems) is approximately 0.6-0.75 mm, and the inner diameter is approximately 0.3-0.4mm; and the outer diameter of the point of a $10\mu$l pipette tip is approximately 0.8mm, and the inner diameter is approximately 0.4mm. By 'point' is meant the open (i.e. dispensing) end of the pipette tip.

Whilst there are many different types of pipette, the most commonly used pipette for filing or aspirating a microplate is a piston-driven air displacement pipette. Depression of the pipette plunger creates a vacuum. The fluid to be dispensed is then drawn up into the disposable pipette tip. The plunger is depressed to dispense the fluid.

Normal operation consists of depressing the plunger button to the first stop while the pipette is held in the air. The tip is then submerged in the fluids to be transported and the plunger is released in a slow and even manner. This draws the liquid up into the tip. The pipette is then moved to the desired dispensing location. The plunger is again depressed to the first stop, and then to the second stop, or 'blowout', position. This action will fully evacuate the tip and dispense the liquid.

Obviously, when dispensing and removing fluid from a microplate, a pipette is chosen which has a tip of an appropriate size for the wells of the microplate.

Biological material may be introduced to, cultured and/or immobilized within individual wells of a microplate.

The term "biological material" or "biological matter" encompasses any material harvested, expressed or purified from an organism or biological source such as proteins, antibodies and cells.

For example, proteins may be immobilised within wells of the microplate, by processes such as adsorption, streptavidin-biotin capture and covalent linking.

Alternatively, living biological cells may be introduced to, and cultured within individual wells of the microplate. The cells are typically introduced as a suspension, wherein a certain volume of the suspension is placed in each well. The loaded microplate is then placed under cell culture conditions (for example in an incubator at 37°C with 5% $CO_2$) for a period of time to allow the cells to settle and adhere to the base of the wells. If desired, the culture time can be extended, to allow the cells which have adhered to the base of the wells to grow and/or multiply, with the aim of providing a confluent monolayer of cells on the base of each well.

A typical procedure for using a microplate in a cell based assay is as follows. The culture medium in which the cells have been adhering/growing is removed, either by aspiration using a probe or pipette (either individual or multichannel), or by tipping out the medium into a waste receptacle or onto paper towels. The culture medium is replaced with a washing solution, which is introduced via a pipette and then removed by aspiration or tipping. The washing step may be repeated.

A fixative is then introduced via a pipette and left for a period of time. The fixative is generally a toxic substance, such as a paraformaldehyde solution (of a final concentration of 4 or 8% (v/v)). The fixative is used with the aim of fixing the cells in position in the wells of the microplate. The use of such fixative can represent a health and safety hazard, as it is highly undesirable for the fixative to come in contact with the skin of the operator. In addition, it is undesirable for the fixative to be inhaled by the user, and it is therefore desirable to prevent aerosolisation of the fixative.

The fixative is then removed by aspiration or tipping, often with the additional step of banging the plate on a paper towel, in an effort to remove excess solution. The cells are washed free of fixative, a process which may require repeated washing efforts. The cells are then ready for the reagents for use in the assay to be applied.

An example of an assay for which a microplate is used is a screening assay wherein it is desirable to investigate the effect of a reagent or compound on a certain property of the cells. For example, it may be desirable to investigate the effect of a reagent or compound on a channel protein, such as a calcium channel protein. An appropriate assay could involve incubation of the cells with a photosensitive dye, such as the fluorescent dye fluo-3AM, which binds to the cells, with excess dye removed by washing. The reagent and appropriate controls are then applied, and removed, and the cells are washed, before the cells are then challenged in order to elicit a fluorescent signal, which is proportionate to the activity of the calcium channel protein as affected by the reagent. The fluorescent signal is detected and quantified by appropriate screening machinery, such as a microplate reader.

As an example of such an assay: it may be desirable to investigate the genotype-correlated sensitivity of selective kinase inhibitors in tumour cell line profiling, as predictive of clinical efficacy. An appropriate assay could involve incubation of diverse epithelial cancer cells with the selective kinase inhibitors; fixing the cells in 4% formaldehyde in phosphate buffered saline(PBS); and staining with the cell-permeant, fluorescent nucleic acid stain Syto60 (Molecular Probes). Fluorescence is quantified using a microplate reader. The sensitivity of each cell line to a given concentration of compound can be calculated as the fraction of viable cells relative to untreated cells. (McDermott et al., PNAS. 2007: 104(50): 19936-19941).

A microplate reader, or spectrophotometer, can be used to quantify the fluorescent signal emitted by a microplate assay, using excitation and emission wavelengths selected in accordance with the fluorescent stain used in the assay. Positive controls (microplate wells containing cells and assay reagents but no test compound) and negative controls (microplate wells containing no test compound and no cells) are included in the microplate.

A measure of the quality of the assay is provided by calculating the Z and Z'-factors.

The Z'-factor or Z' is a dimensionless statistical characteristic. It is calculated from four parameters: the means and standard deviations of both the positive (p) and negative (n) controls ($\mu_p$, $\sigma_p$, and $\mu_n$, $\sigma_n$):

$$\text{Zfactor} = 1 - \frac{3 \times (\sigma_p + \sigma_n)}{|\mu_n - \mu_n|}.$$

The Z-factor is as above, but includes the intervention of test compounds.

The closer the value for Z-factor is to 1, the higher the assay quality, as explained further by the table, below, (from Zhang et al., J Biomol Screen. 1999;4(2):67-73).

| Z-factor | Interpretation |
|---|---|
| 1.0 | Ideal (Z-factors can never actually greater than or equal 1). |
| between 0.5 and 1.0 | An excellent assay. Note that if $\sigma_p = \sigma_n$, 0.5 is equivalent to a separation of **12** standard deviations between $\mu_p$ and $\mu_n$. |

| | |
|---|---|
| between 0 and 0.5 | A marginal assay. |
| less than 0 | The signal from the positive and negative controls overlap, making the assay essentially useless for screening purposes. |

If the Z-factor approaches or is close to the Z'-factor or Z', the assay is suitably optimized. If the Z-factor approaches 0, the assay requires further optimization.

The steps of applying the challenge solution and commencing screening by the screening machinery are typically very time dependent. Signals from the cells are elicited by the plate reader by exposure to specific wavelengths of light. The dyes used in such assays are, therefore, light sensitive, and subject to 'bleach' if exposed to light for prolonged periods. It is therefore necessary for the operator to minimize exposure of the dye, and the microplate once it contains the dye, to light (see Friedrich et al. Nature Protocols. 2009: 4(3): 309-324, and page 317 in particular, where avoiding exposure of the substrate solution to light is considered "critical") and quick, efficient removal and addition of substrates facilitates this.

It is critical in such assays that the signal that would be produced by each well under control conditions is consistent, i.e. that the standard conditions in each well are the same, so that any variation in the signal that is produced is directly attributable to the reactant applied, and not to variations between the wells.

To act as a control, and to verify the reliability of the signal and consistency of the signal across the plate, it is usual for each reactant to be applied to more than one well, and typically, each reactant is applied to an entire row or column of wells.

There are various factors which can influence the signal that is produced per well. For example, the amount of fluid introduced and removed from each well must be consistent. Inconsistencies in the amount of fluid can result in the cells being exposed to variable amounts of reactant and variations in well volume can affect the signal produced and detected as a result of variable light diffraction. Ineffective removal of fluid also results in a residual amount being left in the well, which then dilutes subsequently added solutions. This can inhibit the development of assay substrates.

For example, in ELISA studies, the signal to be read by the microplate reader develops over time, due to enzymatic turnover of a substrate. The developing signal can be measured in a time-course experiment, or the signal can be allowed to develop and then halted at a certain time point by the addition of a 'stop solution', such as hydrochloric acid. In both cases, residual amounts of assay and/or wash buffer can affect the development of the signal.

It is therefore desirable for as much fluid as possible to be removed from each well during each stage of the procedure. To achieve this, the tip of the pipette used to aspirate the fluid needs to touch the base of the well. However, this can cause significant problems, as the pipette tip disrupts biological matter, such as cells, located on the base of the well. Alternatively, the pipette tip could be brought as close as possible to the base of well without actually touching the base. However, this can be very difficult and time consuming to achieve, and can nevertheless result in residual fluid remaining in the well.

It is essential that the number of cells in each well is consistent. As the assays for which microplates are typically used rely upon detection of a signal associated with a change in one or more cellular properties of the cells, variations in the number of cells per well will result in variations in the signal produced per well, making it impossible to assess the effect of the reagent.

Variations in cell numbers can be attributable to many factors, such as poor adhesion of the cells to the plate; non-homogeneous cell suspension when seeding the wells and inadequate fixing of the cells, for example due to the use of an inadequate fixing time or inappropriate/weak fixative.

Further to this, the cells are delicate, and can easily be removed from the base and/or sides of the wells of the microplate, particularly before fixing. Removal of cells can result from the 'whip' or vortex effect of introducing fluid to the well (see, for example, Vichai and Kirtikara. Nature Protocols. 2009: 1(3): 1112-1116, and page 114 in particular, wherein introduction of wash solutions without injecting them directly onto the bottom of the well is considered a critical step), from the suction effect when removing fluid from the well with a pipette, and as a result of tipping or banging out of the fluid from the microplate. A further very important factor is the scraping off of cells by the end of a pipette tip as fluids are introduced or removed.

These factors occur both in plates which are manually prepared by a human operator, and in automated systems which can be used to prepare microplates for screening and/or for carrying out screening.

Manual preparation of microplates requires human processes such as visual observation and hand dispensing of volumes of fluids into individual wells on the plate. Such meticulous work can be challenging for the operator, particularly when the microplate being used has a large number of wells, and/or when the microplate needs to be located in a sterile hood or a fume hood in order to reduce the risk of contamination of the assay, or to reduce the exposure of the operator to the solutions being used. Hoods can be confined spaces to work in and may be poorly lit, making observation and hand pipetting difficult. Human error can occur as a result of fatigue, eye strain, strain on the operator's pipetting arm, wrist and/or hand and failure to remember which well or group of wells have received fluid. Difficulties in pipetting can lead to errors in dispensing and aspirating solutions from the microplate, such as mispipetting or double pipetting; cross contamination of wells; variation between wells in the point of aspiration and/or dispensing, and accidental scraping of biological material from the wells.

Automated systems are aimed at reducing the human involvement in preparing and, optionally screening microplates, in order to reduce errors associated with manual preparation, and the time required to prepare and screen plates. This is particularly the case in high-throughput systems which can be used to prepare and/or screen numerous plates per hour.

Automated systems must be able to manipulate conventional microplates and their contents to allow addition (or removal) of reagents or other materials to (or from) multiple wells of a microplate simultaneously.

Accordingly, automated systems for preparing microplates for screening typically comprise a conveyor, which consists of a continuous belt or one or more plates, and a mobile washer head, movement of which is automated, which is located accurately above the microplate, and then lowered into position to effect aspiration and dispensing of fluid. The washer head typically comprises an array of pairs of tubes, otherwise known as tips or 'pins'. One of each pair of pins is for aspirating fluid from the well, the other for dispensing fluid into the well.

Typically, a microplate is placed on the conveyor by an operator or a robotic arm. A driving mechanism such as a motor moves the conveyor so that the microplate is located underneath the washer head. The washer head is lowered into position, and fluid aspirated/dispensed by the pins on the washer head from/to the microplate as appropriate. For repeated aspiration and dispensing steps, the washer head may reposition, so that aspiration is effected with the washer head tips at their lowest position, in an attempt to ensure that residual fluid is removed, with the tips raised slightly to allow dispensing of fluid. The washer head is raised once the aspiration and dispensing steps are completed, and the motor moves the conveyor back to its original position, from where the microplate is removed by the operator or robotic arm. The process is then repeated with a new microplate. The automated parts of the system are typically controlled by a computer with appropriate software.

It is important that the washer head aligns correctly with the microplate, thus ensuring that the pairs of dispensing and aspirating tips on the washer head are accurately located within the wells of each microplate. In order to achieve this, the conveyor may have raised edges against which the microplate can be located, or other guidance means to help align the microplate accurately on the conveyor.

In some automated systems, the aspiration and dispensing tips are separated from each other, so that both enter the same well, but are located at a distance from each other.

In typical automated systems, the tips are parallel to each other, and are aligned with the centre of the well, with the operator responsible for setting the height alignment. Poor height alignment can result in the tips touching the bottom of well and damaging the integrity of biological material located on the bottom of the well, such as a cell monolayer.

However, in the Biotek® ELX405 Select multifunctional washer, the dispensing and aspirating tubes are separated from each other and the dispensing tube is angled from the vertical towards the aspirating tube. This arrangement is intended to alter the angle at which fluid is dispensed into the well, and provide a swirling motion of the fluid to result in a more vigorous wash. It would appear that the fluid is still dispensed by the angled tube directly onto the base of the well by this Biotek® system.

Some systems are designed so that neither the aspiration nor the dispensing tube tip extends to the base of the well. This can mean, as a result of the gap between the base of the well and the tube tip, that the aspiration tube in unable to remove all of the solution from the well, which results in dilution of subsequently added reagents, thereby reducing their effectiveness. What is more, the dispensed fluid is dropped into the well from a height, which can result in damage to cells located on the base of the well.

In some automated systems, the microplate or tips are moved in a circular and/or cross-wise manner over the well base during aspiration, in an attempt to remove residual solution from each well. This is to aid the removal of residual liquid, which may collect at, for example, the junction between the wall and the base of the well. This process can increase the time needed to prepare the microplate for screening, which is a disadvantage in many high throughput screening (HTS) systems, and can scrape the base of the well if the tube tips are positioned incorrectly, causing damage to the well contents, such as cells adhered to the well base. Additionally, the nature (i.e. the 'fatness') of the base of the microplate well can vary within and between microplates and between manufacturers. For example, wells in a single microplate can have a slightly concave base when viewed in cross section, so that the depth of the well at the edge of the well is different from the depth of the same well at the centre of the well. Alternatively, or in addition, variation in well depth can occur between wells in a single microplate, with wells at the edge of the microplate being deeper than those in the centre of the microplate due to the typically slightly concave nature of the microplate base. The differences in well depth can range from 50 $\mu$m to 350 $\mu$m (from 'High Content Screening - Science, Techniques, and Application' Ed. Haney, S. A. p98, Chapter 4 - Developing Robust High Content Assays). However, the possible differences in well depth across or between microplates are not something that typical automated machinery can accommodate, so that when washer heads move in a circular and/or cross-wise motion, the pins can scrape the bottom of some wells, or some points within the wells, and/or omit to remove fluid from other wells or points within the wells. Further to this, the suction and dispensing pressures used to aspirate and dispense solutions by such systems can cause loosening and dislodging of cells.

Studies have shown that automated systems can produce a typical pattern of cell loss (see, for example, the Biotek poster presentation, which can be found at:

http://www.biotek.com/resources/docs/ELx405 CW Lab Automation Poster2.p df).

The factors discussed above can result either in the complete lifting off of cells from the well, so that the cells are then lost during subsequent fluid removal, or partial lifting of a layer of cells, which can lead to an erroneous signal during the assay, as a result of variable light diffraction.

Obtaining a consistent signal across the microplate is critical and, in view of this, various ways have been suggested for introducing and/or removing solution from a well of a microplate in order to avoid cell disruption.

For example, the microplate may be rotated through 180° following aspiration of a solution from the wells of the plate, in order to perform the related dispensing step at the opposite side of the well. This means that the location points for aspiration and dispensing of fluid are separated from each other, which can help to minimize the disruption caused to biological matter located within the microplate wells, as any damage caused by aspiration is not exacerbated by dispensing of fluid at the same location, and vice versa.

In manual systems, fluids may be removed by the operator by turning the microplate upside down in one motion, which allows the liquid to fall from the well in an uncontrolled manner. However, this can result in inconsistent residual solution volume across the plate, cross contamination between wells caused by splashing, and may also cause mechanical shock to cells leading to cell detachment. Furthermore, such methods of fluid removal are generally not possible in an automated high throughput screening system, and even if they were incorporated, would considerably increase processing times.

An alternative method is for the operator to throw or flick the liquid from the microplate into a waste receptacle or onto a paper towel. However, this can result in inconsistent removal of solution, and the whip effect which can dislodge cells. It can also cause cross contamination between wells. Furthermore, this technique carries an increased risk of splash-back and aerosolisation of the solution, which is undesirable given the toxic nature of the fixative.

Laboratory manuals also teach the use of a 'good pipetting technique', which emphasizes the importance of the operator dispensing the correct amount of fluid, and introducing and removing fluids at the edge of the well, by carefully aiming the pipette tip at a well wall, and allowing the solution to slowly trickle down to fill the well, thereby reducing physical scraping of the pipette tip on the adhered cells, and the whip effect caused by fluid introduction or removal. However, this is not a practical solution for most screening assays which, as discussed above, are time dependent. Furthermore, pipette tips applied to a multi-channel pipette rarely align perfectly, and even a careful pipetting technique cannot avoid variations in pipette tip angle, which can result in inconsistent contact between the pipette tips and wells/cells.

Means of aiding the operator in the introduction and removal of fluids from microplates are also known. For example, US Publication No. 2007/0009396 discloses a multi-well plate "guide protector", which covers all of the microplate apart from the column of wells to be filled or aspirated. The operator places the guide protector over the plate, and fills the column of exposed wells, before sliding the guide to the next column, thereby covering the wells which have been filled. The guide protector aims to prevent double filling of wells, however, it does not prevent inaccuracies of the operator during pipetting, or damage to the cells in the wells as a result of scraping by the pipette tips or fluid addition/removal. Furthermore, the guide protector could not be incorporated into an automated system.

The Hong Kong CH Gene Limited has devised a series of "WellMatch pipetting Guide Manuals" which are distributed by Gene Company Limited. These generally comprise a base, which comprises a platform on which is located an enclosed rectangular area into which the microplate is placed. The base has two screws located along one edge, which can be adjusted to angle the microplate, and a guide cover, similarly to that disclosed in US Publication No. 2007/0009396, which can be placed over the plate to guide pipetting. However, because the raised rectangle is fixed to the platform, the WellMatch base can only be used with a specific size of microplate. Further to this, the screws need to be adjusted manually to obtain the desired angle. This can be time consuming, and it can be difficult to ensure that each screw is adjusted to the same height, in order to prevent pipetting inaccuracies as a result of a variation in the angle of incline across the plate, or rocking of the platform - a factor which is particularly important as the operator of the assay may apply a small amount of downward pressure to the pipette tip before/during pipetting in order to ensure that the tip is in contact with the bottom of the microplate well, thereby preventing the solution from being dropped from a height, which can cause damage to the cells, or residual fluid being left in the well.

The importance of ensuring that the microplate does not move during pipetting is an important issue. Movement of the plate can result in pipetting errors, and, if it should cause the pipette tips to slip, damage to the cells.

WO 2007/01855 discloses a mechanism for positionally restraining a microplate, comprising a base into which the microplate is inserted, and protrusions over which the microplate can be fitted.

US Publication No. 2009/0010811, which is concerned with the provision of an illumination system for enhancing manual handling of a multiwall plate discloses, as part of the system, an elevation apparatus which allows the illuminator with the multiwell plate to be inclined to facilitate observation during dispensing of fluid into the plate. US Publication No. 2009/0010811 discloses that the illuminator may have an alignment feature, to provide proper alignment between each element of the light source and each well, however, there is no means of securing the plate to the illuminator or the inclination mechanism and the use of an illuminator plate is contraindicated where a photosensitive dye is used in the screening process.

A further difficulty associated with accurate pipetting in automated systems, is the necessity for the pipette tips to align perfectly with the wells.

With respect to automated systems, Biotek® provide an automated Microplate Washer system, which has a software controlled flow rate control valve which restricts the flow rate, and an angled dispensing tube to allow the outlet of the tube to be offset from the centre of the well. The angled dispensing of fluid was not considered to significantly affect cell loss. However, Biotek® report, in studies associated with the automated Microplate Washer system, that the critical parameter in preventing cell loss was the fluid dispensing rate. It was found though, that using low flow rates caused premature aspiration of the fluid being dispensed, resulting from formation of a droplet at the end of the dispensing tube, which, as it grew, came in sufficiently close proximity to the end of the aspiration tube for it to be aspirated without having ever entered the well. To eliminate this problem, Biotek® incorporate into their system a "Vacuum on Volume" feature, which allows the user to delay the initiation of aspiration for a brief period, to allow the fluid droplets to flow into the well before aspiration commences.

Slowing the rate of flow obviously increases the time needed to prepare the microplate for screening, and this is disadvantageous in high throughput screening systems. Further to this, the inclusion of software to control flow rate, additional flow rate valves and the accompanying vacuum system have an impact on the cost of the screening process.

Modification of microplates to avoid some of the problems associated with cell loss and plate inconsistencies has also been considered.

WO 99/20394 discloses a microplate assembly comprising a plurality of vent tubes and caps. The vent tubes, which are for the purpose of permitting the pressure within the interior volume of the well to be equalized with the ambient pressure, terminate in a vent that communicates with the interior of the well. Material may be added to, or removed from the wells via the vent passage. However, the vents disclosed in WO 99/20394 are located in the centre of each well, and introduction of fluid via a standard pipette tip would result in fluid being dropped from a height directly onto, and removed at a height from the centre of the well, which could result in physical damage to cells growing in this area. WO 99/20394 also discusses the use of a probe, which is narrow enough to allow insertion into the base of the well via the vent, in order to add or remove fluid. Ejection of fluid through such a narrow probe though, particularly under the conditions required of an automated system where plates need to be prepared and screened rapidly, could cause damage to cells growing in the wells.

US 7,326,385 discloses a multi-well plate wherein each well is coupled to an adjacent aspiration hole, so that the well and the hole are in fluid communication. Media can thus be aspirated and replaced from the wells without disturbing the tissue samples in the wells. However, the plate described in US 7,326,385 is, from a manufacturing perspective, quite different from standard microplates, as it requires an additional hole to be placed next to each well with a channel between the hole and the well, and this has cost implications. Furthermore, the entry point for fluid into the wells of the plate disclosed in US 7,326,385 is at the base of the well, i.e. underneath any cells growing on the base of the well. Introduction of fluid could, therefore, disrupt cells growing in the well.

US 5,017,341 is concerned with the increasing the sedimentation speed of particles in test solutions used in agglutination reactions.

It is therefore desirable, and an object of the present invention, to provide a means for improving the introduction and removal of fluids ("fluid exchange") to and from the wells of a microplate which minimizes damage or disruption to biological material, such as cells located within the wells, and which minimizes the health and safety risks associated with the use of toxic substances during the assaying procedure.

Accordingly, it is an object of the present invention to provide a simple and inexpensive means for introducing and removing solutions to and from a well of a microplate, which minimizes damage to biological material located within the wells.

In particular, it is an object of the present invention to provide a means for fluid exchange which provides a specific area for communication of a pipette tip with a microplate well.

It is a further object of the invention to provide a means for facilitating and standardizing the introduction of a pipette tip into a well of a microplate.

It is a further object of the invention to provide a means for introducing and removing solutions from a microplate that minimizes the exposure of the user to the solutions being used.

A further object of the present invention is to provide a means for improving the ease of operation and comfort of the pipette operator when solutions are introduced and removed from a microplate manually.

It is a further object of the present invention to provide a means for introducing and aspirating solutions to and from a well of a microplate which decreases the amount of time required to introduce or aspirate the fluid in comparison to known means which incur the same level of damage to biological material located in the wells upon introduction/aspiration of fluid.

It is a further object of the invention to provide a means of improving and aiding the removal of fluid from microplate wells, and in particular, a means for ensuring that a consistent amount of fluid is removed per well, so that the amount of residual fluid per well is minimized, and is consistent across the wells in the microplate.

It is a further object of the invention to provide an improved microplate for the introduction and removal of fluid. In particular, it is an object of the invention to provide an improved microplate for the introduction and removal of fluid wherein the improvements result from modifications to the plate which are easily incorporated into the manufacturing process.

It is a further object of the present invention to provide a microplate holder which stably holds a microplate in a position which will aid the removal of fluid from and addition of fluid to the wells of the microplate. Preferably, the microplate will be held in a stable position even upon the application of downward pressure as may be applied to the well by the user or automated system during aspiration or introduction of fluid to the wells of the microplate.

It is also an object of the invention to provide a microplate holder which facilitates the introduction and aspiration of solutions to and from a well of a microplate in such a manner that may decrease the amount of time required to carry out the same operations in comparison to known means which incur the same level of damage to biological material within the wells upon introduction/aspiration of fluid.

It is also an object of the invention to provide a microplate holder which allows aspiration of all or substantially all of the fluid in a well of the microplate in a single action thereby minimizing residual fluid left in the well.

It is a further object of the present invention to provide a microplate holder which is inexpensive to manufacture.

A further object of the present invention is to provide a microplate holder which improves the ease of operation and comfort of the pipette operator when solutions are being introduced and removed from a microplate manually.

A further object of the present invention is to provide a microplate holder which can be incorporated into an automated system, and in particular, which can be incorporated into an automated system without requiring any substantial change to existing equipment, or incurring undue cost associated with fitting the mounting.

A further object of the present invention is to provide a microplate holder which is reusable.

It should be noted that the various embodiments of the invention discussed below seek to satisfy one or more of the abovementioned objects.

## Summary of the Invention

Accordingly, in a first aspect of the invention, there is provided a microplate comprising a plurality of open wells, wherein one or more of the wells comprise an area for communication with the tip of a pipette which provides a point of contact between the dispensing end of the pipette tip and the microplate well in use, wherein the area for communication with the pipette tip is located at the junction between the base of the well and the wall of the well and wherein the area for communication with the pipette tip comprises one or more raised areas or protrusions located on the base and/or wall of the well interior, and/or one or more recesses or indentations in the wall and/or base of the well; and wherein the area for communication with the pipette tip is such that, in use, the dispensing end of the pipette tip bridges the gap between a point on the base of the microplate well and a point on the wall of the microplate well to create a channel for aspiration and dispensing of fluid.

In certain embodiments, the area of the well for communication with the tip of a pipette is shaped to receive the tip of the pipette. This shaping helps to provide the tip of the pipette with access to any fluid in the well, facilitates removal or aspiration of said fluid, and in particular, facilitates removal or aspiration of residual fluid which remains following aspiration of the majority of the fluid from the well. The area of communication is preferably provided so that the addition or removal of fluid to or from the well using a pipette will cause minimal and/or predictable and controlled disruption to any biological matter, such as cells, located in the well.

Providing a specific area for communication of the pipette tip with the well has numerous advantages. It controls the contact between pipette tip and the microplate well, thereby ensuring that the specific contact area between microplate well and the pipette tip is consistent across the wells in the plate. This means that in each well, only the biological matter at the specific pipetting point of contact, or in the immediate vicinity thereof will be physically disrupted by the pipette tip. This not only reduces the amount of biological matter, such as the number of cells, scraped off per well, but standardizes the amount or number of cells that are damaged or removed per well.

A specific contact point also provides the operator with a specific point to aspirate fluid from, and/or dispense fluid to, or can act as a reference point to allow the operator to consistently dispense fluid at an alternative location within the well if desired. These factors reduce the effect upon biological matter located in the wells caused by variations in the height from which fluid is dropped, and facilitate introduction and removal of fluids from the wells, thereby reducing the time taken to carry out the assay. Providing a specific point of contact within each microplate well provides the operator with 'feedback' regarding the location of the pipette tip. This can help to improve the accuracy of pipetting, and allows the operator to apply a small amount of downward pressure to the pipette tip before/during pipetting, safe in the knowledge that the pipette tip is located within the correct place within the well. Further to this, the microplate may be rotated by the operator or automated system through, for example 180°, following aspiration of a solution from the wells of the plate, in order to perform the related dispensing step at the opposite side of the well. This means that the location points for aspiration and dispensing of fluid are separated from each other, which can help to minimize the disruption caused to biological matter located within the microplate wells, as any damage caused by aspiration is not exacerbated by dispensing of fluid at the same location, and vice versa. Providing a microplate with a specific area for communication with a pipette tip at one or both of the aspiration and dispensing locations allows the operator to aspirate and dispense fluids knowing that the pipette tip is positioned consistently.

The introduction of a modification to a microplate well which serves as a contact point for the pipette tip has the potential to create a natural 'weak point' in the biological matter located within the well. Contact of a pipette tip with biological matter in a microwell plate inevitably results in damage to the matter, due to its delicate nature. The creation of a weak point could have the advantage that the damage caused by the pipette is more likely to be limited to this area, as the biological matter at the weak point is 'sacrificed' by contact with the pipette tip whilst the integrity of the surrounding cells, which do not form part of the weak point, is maintained.

The presence of a contact point also acts to reduce turbulence in the fluid being aspirated or dispensed, particularly when a channel is formed between the pipette tips and specific areas of communication within the well provided for that purpose.

As a result of the microplate modifications according to the invention, the amount of biological matter (for example, the number of cells) per well will be consistent across the microplate. This leads to an improvement in assay quality, as it provides more reliable results, improves confidence in the results obtained, reduces the number of experimental repeats that are required, and reduces the number of false positives. All of these factors contribute to a reduction in the cost associated with the assay, particularly as it means the number of repeats of an assay can be minimized. This has the environmental benefit of reducing the number of microwell plates that need to be used, which is advantageous as microwell plates are typically made substantially of plastic, which it may not be possible to recycle due to the nature of the plastic and/or the nature of the reactions carried out in the microplates (for example reactions involving human- or animal-derived cells, or hazardous reagents).

Providing a specific area for communication of the pipette tip with the well of a microplate also has the advantage that it allows solutions to be introduced and removed to and from the well without significantly extending the amount of time required to introduce or aspirate fluid in comparison to known means (i.e. introducing or removing fluid by simply inserting a pipette tip into the well without any guidance mechanism or contact point), a factor which is very important in time-sensitive assays. In fact, providing a specific area for communication of the pipette tip with the well of a microplate can allow more rapid introduction or removal of fluid to the well in comparison to known means, as the fluid can be introduced or aspirated more rapidly as the damage caused to the biological matter within the well is localised and/or reduced, preferably to negligible levels.

A further advantage achieved by the present invention is the improvement in fluid removal from the well, which facilitates the job of the user, or the automated system, and in particular, ensures that the amount of residual fluid per well is minimized, or substantially removed completely. Residual amounts of assay buffer or reagents can dilute subsequently added solutions, and inhibit the development of assay substrates. For example, residual wash solution or buffer affects ELISA substrate development. Residual levels of wash buffer also reduce the signal-to-noise ratio, and hence affect the Z' and Z-factors.

Providing an effective means for removing fluids from a microplate also obviates the need for the solutions to be tipped, flicked or banged out of the plate. This reduces the likely damage to biological matter, and in particular, cells within the plate and minimizes the exposure of the user to the solutions being used in the assay. This can have significant health and safety benefits, particularly where the solutions being used are toxic.

Providing a means for facilitating the introduction of a pipette tip into a well of a microplate by, for example, providing a guide channel, also has numerous advantages. Firstly, it guides the pipette tips into a standard position, which can comprise the area for communication with the pipette tip, which ensures that each well is subjected to the same contact with the pipette tip, thereby preventing unnecessary cell disruption. Providing a guidance mechanism allows the operator to insert the pipette tips accurately and quickly, thereby reducing human error and increasing the speed of the assay. In addition, without a means of guiding the pipettes tips into the microplate, the user typically uses one hand to hold and operate the pipette and the other to guide the pipette tips into the well. An additional advantage, therefore, of providing a guide channel, is that is leaves the user with one hand free to hold the microplate or microplate holder on the work bench.

Providing an angled guidance channel (for example, a guide channel which is shaped like a "V"), into each well also has the advantage that it improves the comfort of pipetting by decreasing the stress placed on the user's arm. In addition, such guide channels can help manual pipetting using a multichannel pipette in particular, as when pipette tips are placed onto a multichannel pipette, they frequently fail to line up entirely straight. Provision of a guide channel which is wide (for example, significantly wider than the tip) at the point of entry for the pipette tip, and which then narrows, for example to approximately the width of the tip, acts to 'funnel' the pipette tip point(s) to the contact point with the well wall/ base and thus helps to line up the pipette tip points, without requiring a change in the normal pipette loading procedure, or requiring the operator to increase or make further operations in microplate processing.

According to a second aspect of the invention, there is provided a a system comprising a combination of a microplate according to the first aspect and a microplate holder, wherein the microplate holder comprises a means for inclining a microplate, so that the microplate is positioned so that one aspect, side or edge of the microplate is vertically raised relative to another aspect, side or edge of the microplate.

According to a third aspect of the invention, there is provided an automated microplate device comprising a system according to the second aspect. The device may further comprise a microplate washer head which can be moved laterally, so that it can be located accurately over the microplate, rotated for interaction with a microplate in an inclined position, and/or raised or lowered (either perpendicularly to the horizontal; or at an angle to the horizontal, so that the upward and downward motion is 'diagonal') for aspiration and dispensing of fluid from the microplate. The microplate washer head may further comprise bespoke aspiration and dispensing tips or pins, to allow effective aspiration and dispensing of fluid to and from an inclined microplate, or at or away from a specific contact point in the microplate.

## Detailed Description of Embodiments of the Invention

In certain embodiments according to the first aspect of the invention, the area for communication with the pipette tip comprises one or more areas located on the base and/or wall of the well interior. In certain embodiments, the area for communication with the pipette tip comprises an area of the well base and/or well wall, preferably a localised area of the well base and/or wall. Locating an edge of the pipette tip on the wall of the well, and an edge of the tip on the base of the well has the advantage of reducing the possibility that the aspirating/dispensing hole of the pipette tip is blocked, as it creates a channel for introduction/release of fluid, in contrast to if the pipette tip contacts the well in perpendicular fashion, which results in the hole being fully in contact with the well base.

In alternative embodiments, the area for communication with the pipette tip is raised from the surface of the well base or wall respectively. This has the advantage that the pipette tip does not come into contact with the biological matter (such as a cell monolayer) located on the microwell base. Accordingly, any cell disruption resulting from introduction of the pipette to the microplate well is restricted to the raised areas, thereby minimizing damage to the cell monolayer on the well base.

In certain embodiments, at least two raised areas are located on the well base. In preferred embodiments, at least one such raised area or protrusion is located on the well base. In alternative preferred embodiments, one such raised area or protrusion is located on the well base with another such raised area located at a substantially adjacent point on the well wall.

In preferred embodiments according to the first aspect of the invention, one area for communication with the pipette tip is provided per well. This allows the operator to identify the location for the aspiration step by the presence of the area for communication with the tip, and then, having performed the aspiration step at this location, rotate the plate through 180° and perform the dispensing step at the opposite side of the microplate wells by carefully releasing the fluid against the wall of the wells. This embodiment has the advantage that the aspiration step can be performed relatively quickly, and at a consistent location within the microplate wells, due to presence of the area for communication with the pipette tips on which the tips can be located; whilst the dispensing step can be carried out at a separate location within the microplate wells. This arrangement aims to minimize disruption to biological matter located within the wells, whilst increasing the speed at which fluid can be aspirated from the wells.

Alternatively, at least two areas for communication with the pipette tip, each comprising one or more raised areas, may be provided per well, wherein the areas are located at substantially opposite sides of the well. The provision of areas for communication with the pipette tip at both the intended aspiration and dispensing points ensures that contact between the pipette tip and the biological matter on the base of the well is minimized. Furthermore, the microplate can be rotated by the operator or automated system through substantially 180° following aspiration, in order to perform the related dispensing step. The location points for aspiration and dispensing of fluid are thus separated from each other, so that any damage to biological matter in the well caused by aspiration is not exacerbated by dispensing of fluid at the same location, and vice versa.

The specific area for communication between the pipette tip and the microplate well may be located in the area of the microplate well where, following aspiration of the majority of fluid from the well, residual fluid typically collects, to facilitate removal of residual fluid from the microplate, for example the junction between the bottom of the well and the wall of the well. Accordingly, in certain embodiments, the raised area extends between the wall of the well and the base of the well, and the edges of the pipette tip can be entirely located on the raised area.

In preferred embodiments according to the first aspect of the invention, the raised area(s) may be spaced so that when the pipette tip is introduced, one or more edges of the pipette tip rest on raised area(s), or on the raised area and on the well wall/base, thereby forming a channel between the pipette tip and the raised area(s)/well wall/base for the release and aspiration of fluid.

Accordingly, in embodiments of the first aspect of the invention comprising two or more raised areas, the raised areas are located at a distance from each other which is approximately comparable to the diameter of an appropriately sized pipette tip for the assay, so that the pipette tip can be located on the two raised areas, rather than touching the base of the well. For example, when a 20$\mu$l or a 200$\mu$l pipette is used, the raised areas may be located between 0.1 and 0.75 mm apart, more preferably between 0.25 and 0.5mm apart, and even more preferably between 0.35 and 0.45 mm apart; and when a 10 $\mu$l pipette tip is used, the raised area(s) may be between 0.1 to 0.775 mm apart, and more preferably between 0.25 and 0.5mm apart, and even more preferably between 0.35 and 0.45 mm apart.

In certain embodiments according to the first aspect of the invention, the raised areas may be located so that one or both of the aspiration and dispensing tubes provided in an automated system will locate thereon.

The raised areas may have any two-dimensional or three-dimensional shape, including cuboidal, pyramidal, hemispherical, conical, cylindrical, or any form of prism, and located in any orientation. In preferred embodiments, the raised areas are approximately the shape of prisms.

The area(s) for communication with the pipette tip may comprise, or communicate with means for preventing lateral movement of the pipette tip.

For example, the raised areas may be shaped to prevent lateral movement of the pipette. For example, a raised area may comprise one or more substantially cuboidal areas on which an aspect of the pipette tip can be located, and additional raised areas, against or between which the pipette tip can be located. Such additional raised areas may be located on either side of one or both of the raised area(s) on which the pipette tip is intended to be located, and may be greater in height than the raised area(s) which is intended to communicate with the pipette tip. This helps to prevent lateral movement of the pipette tip. For example, a raised area intended for communication with the pipette tip located in the junction between the bottom of the well and the wall of the well, may have an additional raised area on either side.

The raised areas may be any size suitable for location within a well of a microplate, and/or for location of an appropriately sized pipette tip or pipette tip edge on or substantially on the raised area. For example, for a microplate wherein the appropriate pipette tip is a 300$\mu$l, 200$\mu$l, 50$\mu$l or 10$\mu$l tip, the maximum diameter of the surface of the raised area intended for contact with the pipette tip, or an edge of the pipette tip may be between 0.1mm and 2mm, more preferably between 0.5mm and 1.5mm and even more preferably between 0.7mm and 1 mm. It should be noted that the pipette tip may be blocked or compromised with regard to fluid aspiration or release by the raised area(s) if the surface of the raised area intended for contact with the pipette tip is either too small or too large.

In preferred embodiments according to the first aspect of the invention, the size and/or location of the raised areas should correspond to the size of the pipette tip or the diameter of the pipette tip used in the assay, so that the pipette tip can be contacted with two or more raised areas, or one raised area and the wall or base of the well, and thus be prevented from substantially touching the base of the well.

The raised areas are preferably of minimal height, in order to allow effective aspiration of residual fluid from the wells of the microplate. For example, the maximum height of a raised area is preferably no more than 1.5mm; more preferably no more than 1mm; even more preferably no more than 0.75mm; and most preferably no more than 0.5mm.

In certain embodiments wherein the invention comprises more than one raised area, one of the raised areas intended for communication with the pipette may be greater in height than the other raised area(s).

In alternative embodiments according to the first aspect of the invention, the area for communication with the pipette tip comprises one or more recesses or indentations in the wall and/or base of the well.

In preferred embodiments according to the first aspect of the invention, the indentation accommodates the point of a pipette tip of a size appropriate for the assay. By this is meant that the indentation is of a size such that the dispensing end of a pipette tip which is chosen as appropriate for the assay being used inserts, at least partially, into the indentation.

Accordingly, in preferred embodiments, the indentation has approximately or substantially the same diameter as the open (i.e. dispensing end) of the pipette tip. For example, when a 20μl or 200μl pipette is used, the maximum diameter of the indentation(s) may be 2 mm-0.1mm. More preferably, the maximum diameter of the indentation(s) is 0.5mm and 1.5mm, more preferably between 0.25 and 1.25mm, 0.7 and 1 mm, or 0.3 and 0.7mm.

Tailoring the size of the indentation to the size of the pipette tip being used can help to prevent movement of the pipette tip once it has been introduced into the indentation. It should be noted that the pipette tip may be blocked or compromised with regard to fluid aspiration or dispensing if the indentation is too deep. Accordingly, the indentation(s) should be no more than 1 mm deep. More preferably, the maximum depth of the indentation(s) is 0.1 to 0.5 mm.

In certain embodiments according to the first aspect of the invention, the indentations or recesses may be located so that one or both of the aspiration and dispensing tubes provided in an automated system will locate therein.

The indentation may be any shape, for example, cuboidal, pyramidal, hemispherical, conical, cylindrical, or any form of prism, and located in any orientation. Pipette tips are typically circular in cross-section, and tailoring the shape of the indentation to the shape of the pipette tip end can help to prevent movement of the pipette tip once it has been introduced into the indentation.

In preferred embodiments according to the first aspect of the invention, the indentation located on the walls of the well is substantially pyramidal or cuboidal in shape; and the indentation located on the base of the well is substantially pyramidal or cuboidal in shape.

In some embodiments according to the first aspect of the invention, the area for communication with the pipette tip may comprise one or more raised area located on the wall or base of the well, together with one or more indentation(s) on the wall or base of the well.

In preferred embodiments according to the first aspect of the invention, all or substantially all of the wells of a microplate comprise an area for communication with the tip of a pipette located substantially at the base of the well.

In certain embodiments according to the first aspect of the invention, the microplate of the present invention comprises, or further comprises, one or more wells which comprise a guide channel.

In preferred embodiments, the guide channel accommodates a pipette tip of a size appropriate for the assay. By this is meant that the guide channel is of a size such that a pipette tip which is chosen as appropriate for the assay being used inserts, at least partially, into the channel.

In certain embodiments, the guide channel is of a uniform depth into the well wall (i.e. non-tapered). In alternative, embodiments, the guide channel comprises a tapered indentation in the interior wall of the well, so that the indentation is deeper at the lip of the well, and is less deep at the base of the well (i.e. the indentation extends further into the wall of the well at the top than at the bottom), so that from the perspective of a vertical cross-section through the well, the channel appears angled from the vertical.

In an alternative embodiment, the guide channel comprises one or more areas located on the wall of the well interior which are raised from the surface of the well wall. In preferred embodiments, at least two raised areas are provided. In preferred embodiments, the raised areas are shaped or located such that they create a channel on the interior wall of the well, (i.e. a channel occurs between the raised areas), in which the pipette tip can be located. In certain embodiments the channel is deeper at the lip of the well, and is less deep at the base of the well (i.e. the raised area(s) extend further from the well wall at the top than at the bottom of the well), so that from the perspective of a vertical cross-section through the well, the channel appears angled from the vertical. In an alternative embodiment, the guide channel is of a uniform depth (i.e. non-tapered, so that the raised area(s) extend an equal amount from the well wall throughout their length). The raised areas forming the guide channel may be shaped to help receive the tip of the pipette. For example, the raised areas may be, in shape, pyramidal, conical, cylindrical, or any form of prism or cross-sections thereof, and located in any orientation.

In certain embodiments according to the first aspect of the invention, the end of the guide channel which is located near the base of the well ends (i.e. so the indentation or raised areas that form the guide channel ceases) at the base of the well, so that the area on the base of the well that the pipette tip is guided onto by the guide channel is the area for communication with the pipette tip. In alternative embodiments, the end of the guide channel which is located near the base of the well ends in close proximity to a raised area which is located on the wall or base of the well, so that the pipette tip is guided by the guide channel onto the raised area, which constitutes or partly constitutes the area for communication with the pipette tip. In a further alternative embodiment, the end of the guide channel which is located near the base of the well terminates in an indentation in the well wall, or the well base, which constitutes or partly constitutes the area for communication with the pipette tip. In some embodiments wherein the end of the guide channel terminates in an indentation in the well wall, the indentation communicates with a raised area which is located at the junction between the wall of the microplate well and the base of the microplate well; the indentation and raised area then constitute or partly constitute the area for communication with the pipette tip.

In certain embodiments according to the first aspect of the invention, the guide channel commences substantially at the lip of the well, and ends substantially at, above or below, the base of the well. In a preferred embodiment, the guide channel commences substantially at the lip of the well.

In preferred embodiments, the first aspect of the present invention decreases the amount of time required to introduce or aspirate fluid in comparison to an unmodified microplate/known systems which incur the same level of cellular damage to biological material located within the wells upon introduction/aspiration of fluid.

Microplates according to the first aspect of the present invention may be made by injection moulding. A metal mould used to create standard microwell plates would require little modification in order to make a microplate in accordance with the present invention. This is an advantage of microplates according to the present invention, which do not require the creation of complex moulds or the use of specialist manufacturing steps, which could be costly and time-consuming.

In particular, embodiments according to the first aspect of the present invention wherein the area(s) for communication with the tip of the pipette comprise one or more raised areas on the base of the microplate well, and/or one or more indentations or recessed areas on wall of the microplate well, could be manufactured using moulds based upon those used to create standard microplates, without the need for significant modification. Furthermore, creation of such microplates would not cause significant technical difficulties; there is potential, during the removal of a metal mould template from a newly created microplate, for the microplate to be damaged. Raised areas or protrusions located on the microplate well base, and indentations or recesses located on the microplate well wall would not adversely affect the ease with which the mould could be removed. Accordingly, the potential for damage to the plate is not increased by any significant degree when using a mould suitable for creating a microplate comprising one or more raised areas, indentations, or recesses, in accordance with the present invention, than when creating standard microplates.

With regard to the second aspect of the present invention, the phrase "inclining a microplate" means positioning the microplate so that one aspect, side or edge of the microplate is vertically raised relative to another aspect, side or edge of the microplate. This results in the microplate being held in an inclined position, that is, in a position wherein it is at an angle from (i.e. it is not parallel with) its conventional horizontal orientation.

In certain embodiments according to the second aspect of the invention, the means of inclining the microplate comprises a support which raises one aspect, side or edge of a microplate, thereby inclining the microplate. In certain embodiments according to the invention, one of the short edges of the microplate (when considering the microplate to be rectangular in shape) is raised relative to the short edge of the microplate which is diametrically opposite. In alternative embodiments, one of the long edges of the microplate (when considering the microplate to be rectangular in shape) is raised relative to the long edge of the microplate which is diametrically opposite.

In a preferred embodiment, the angle of inclination of the microplate is sufficient to ensure that fluid collects at a single aspiration point, such as one area of the well. This enables the removal of all, or substantially all of the solution contained within the well in one action.

In some embodiments, the angle of inclination is between 1-16°; 2-15°; 2.5-15°; 3-14°; 3.5-13.5°; 4 to 13.5°; 5 to 13.5°; 6 to 13.5 ° or 6.5 to 13.5° from the horizontal. In a preferred embodiment, the angle of inclination is 5°, 6°, 6.5° or 7° from the horizontal. In an alternative preferred embodiment, the angle of inclination is 10°, 11°, 12°, 13° or 13.5°.

A consideration in selecting a preferred angle of inclination is the quantity of fluid in each well, as the angle of inclination should not be so great that it causes the fluid located within the wells to leave the wells. Relating to this, an increase in the angle of inclination beyond around 15°or 20° from the horizontal is less preferred, as this will limit the volume of solution that can be introduced to each well and can cause microplate instability. Manual operation can also become restricted at angles of inclination beyond around 25° from the horizontal.

In some embodiments according to the second aspect of the invention, the means for inclining the microplate is fixed at a pre-determined angle of inclination or it provides a single predetermined angle of inclination when in use.

In alternative embodiments, the means for inclining the microplate is adjustable, so that the microplate may be moved from a substantially horizontal position to a desired angle of inclination. In order to achieve such movement, the means for inclining the microplate may comprise one or more supports of adjustable height or one or more supports which may engage with different parts of the microplate to produce a variable angle of inclination.

For example, the support may be one or more legs which support one aspect, edge or side of the microplate and hold it above the level of another aspect, side or edge of the microplate. The leg(s) may comprise indentations at differing vertical heights, to which an aspect of the microplate can be introduced. In certain embodiments, the indentations correspond to at least the vertical depth of the microplate, thereby allowing an end of the microplate to be fully accommodated within the indentation. In alternative embodiments, the indentations may accommodate part of the microplate, such as, for example, a ledge located on the underside of the microplate.

Alternatively, the support may be one or more rotating legs, telescopic legs, or piston arrangements. The support may comprise one or more adjustable screws. The use of more than one screw has the advantage that the microplate can be stabilized despite being located on an uneven surface.

The height of the support will determine the angle at which the microplate is inclined. The support may raise the microplate to a single height or it may be adjustable to allow the angle of inclination of the microplate to be varied.

In preferred embodiments according to the second aspect of the invention, the angle of inclination of the microplate when located on the microplate holder is consistent across the microplate.

The means of inclining the microplate may comprise an inclined platform on which the microplate is to be located. The inclined platform may be a substantially planar area, which is located at an angle to the horizontal, so that one aspect or side of the platform is vertically raised relative to another aspect of the platform. A microplate will sit upon the inclined platform, so that it is held at an angle from the conventional horizontal orientation of the microplate. The platform may be of a size and shape suitable to accommodate a microplate, for example, it may be substantially rectangular in shape. The platform may have a fixed inclination or it may be adjustable to allow inclination of the microplate to one or more positions.

In some embodiments according to the second aspect of the invention, the microplate holder may comprise a base portion which, in preferred embodiments, is substantially planar so that it may be located on a surface, such as a laboratory bench. In a particular embodiment, the base portion is of a size and shape which will afford the microplate holder stability and resistance to being knocked over. For example, the base portion may be a plate, the plate preferably having dimensions at least equalling those of the microplate to be held by the microplate holder.

It is important for the microplate to be stably held in the inclined position. This stability of the microplate may be enhanced by providing a means by which the microplate engages with the microplate holder.

In some embodiments, an engaging means is provided by the microplate holder. For example, the engaging means may be in the form of one or more raised areas or protrusions on the microplate holder, and in particular, on the base portion and/or platform of the microplate holder, which engage with the microplate to restrict the relative movement of the microplate and holder. The raised areas or protrusions may simply abut against one or more surfaces of the microplate.

For example, where the microplate holder comprises a platform, the platform may include raised edges on its surface against which the microplate can abut. In some embodiments, the platform has two or three raised edges, and the microplate is slid into position on the platform with the outer surfaces of the walls of the microplate in contact with the internal surfaces of the raised edges of the platform. The internal surfaces of the outer edges may comprise grooves to aid location of the microplate on the platform.

In some embodiments, the raised area or protrusion on the microplate holder interacts with a recess on the surface of the microplate. For example, the underside of a microplate is typically open (rather than enclosed and presenting a smooth flat surface), so that the bases of the wells are exposed. In certain embodiments of the present invention, raised areas or protrusions on the microplate holder may protrude into the recess(es) formed by the open areas on the underside of the microplate. The protrusions can help to secure the microplate to the means for inclining and help prevent movement of the microplate during inclination or assaying.

In some embodiments, the raised areas or protrusions are shaped in order to minimize or prevent movement of the microplate in certain directions as it is being brought into the inclined position or as it is held in that inclined position. For example, the raised areas or protrusions may be shaped to minimize or prevent movement of the microplate in a substantially vertical direction.

In alternative embodiments according to the second aspect of the present invention, the microplate holder may comprise one or more indentations or recesses in order to aid engagement of the microplate and to help prevent lateral movement of the microplate during inclination or assaying. In preferred embodiments, the recesses are located on the platform of the microplate holder. In some embodiments, the recess on the platform may be of a suitable size to accommodate all or substantially all of a microwell plate, so that once the plate is inserted into the recess, lateral movement of the plate within the recess is minimized. Alternatively or additionally, the holder may comprise one or more raised areas or protrusions, to aid location of the microplate on the holder and help prevent movement of the microplate during inclination or assaying.

The microplate holder may further comprise a means for securing the microplate, such as a locking means, to securely engage the microplate to be inclined, thereby preventing substantially all relative movement between the holder and the microplate. In one embodiment, the locking means is provided in the form of one or more securing clips located on one or more of the sides of the means of inclining the microplate, in order to prevent upward or lateral movement of the microplate during inclination or assaying.

The securing clips may be spring-loaded, so that pressure exerted by the user on the clip causes extension of a spring to which the clip is attached, causing the clip to extend in order to engage with and/or accommodate an edge of the microplate.

The microplate is then engaged with the holder, and the clip returns to its rest position as a result of contraction of the spring.

In other embodiments according to the second aspect of the invention, the means for securing the microplate to the microplate holder may comprise a rotating clip, into which one edge of the microplate can be located. The clip may comprise a cylinder, which rotates around a central axis, with an opening into which an edge of the microplate may be inserted. The cylinder may be rotated, to allow the opposite end of the microplate to be lowered so that the microplate is at the required angle of inclination. In some embodiments, movement of the rotating clip is restricted, preferably between two positions: a raised position which allows insertion of an edge of the microplate, and a lowered position which places the microplate at the required angle of inclination. The restriction of movement of the cylindrical rotating clip may be effected by the use of two pins, which prevent the cylinder from rotating past a certain point, or by a shaped guide, into which the cylinder is inserted, and with which the cylinder and microplate, once it is inserted into the cylinder, communicate at the extremes of the rotation.

Alternatively, or in addition, the securing means may be provided in the form of one or more securing pins, which can be inserted by the operator into hole(s) located on the means of inclining the microplate. The holes are located outside the area on the means for inclining the microplate that the microplate occupies in use, so that the microplate can be positioned on the microplate holder, and the securing pins then inserted into the holes to prevent movement of the microplate. Preferably the holes are located on one or more of the 'open' sides of the microplate (i.e. the sides of the microplate that do not communicate with alternative locking means, such as a securing clip), in order to prevent lateral movement of the microplate. In preferred embodiments, there is provided a securing pin, which locates in a hole of the microplate holder, which is contained within a substantially oval or pear shaped part or clip, which provides an ergonomically shaped feature that the user can comfortably grip and rotate, thereby locking the microplate in place.

As an alternative to securing pins, the locking means may comprise one or more screws which can be inserted into a threaded hole(s) in the microplate. By 'screw' is meant a elongated shaft, which has a thread located substantially at one end for communicating with the threaded hole in the microplate holder; and a head located at the opposite end, which is of a suitable shape for manipulation by an operator and/or for locating over an edge of the microplate. In some embodiments, the microplate is located on the holder, and the screw inserted into the holder and tightened so that the head of the screw is located over an edge of the microplate and applies downward pressure thereby securing the microplate to the holder. In alternative embodiments, the head of the screw can be located against an edge of the microplate, thereby applying lateral pressure to the microplate, and securing it against an opposing side of the holder. The use of an adjustable screw has the advantage that different sizes of microplate can be accommodated.

In alternative embodiments, the pins or screws are located in, and extend upwards from the means for inclining the microplate, so that the microplate may be located against them. The pins or screws may be spring-loaded, or otherwise upwardly adjustable. Where a screw is used, it may be adjusted so that the head of the screw exerts downward pressure on an edge of the microplate.

It is desirable that the engaging means and any locking means do not obstruct access to the wells of the microplate.

The microplate holder may further comprise a means for stabilizing the holder. In certain embodiments, the means for stabilizing the holder comprises one or more protrusions or handles which extend from the holder, on or over which an operator may place a hand in order to stablize the holder. This allows the operator to use a pipette to aspirate or dispense fluid to the wells of the microplate with one hand, whilst stabilizing the plate with the other. Preferably, the protrusions are located at the lower aspect of the holder, so that they communicate with the substantially horizontal surface on which the holder is located in use (such as a lab bench). Preferably, the protrusions are of a suitable size to allow an operator to place a hand on or over the protrusion and apply downward pressure. In certain embodiments, the protrusions are shaped so as to assist and/or make it comfortable for an operator to place a hand on the protrusion and exert downward pressure. Preferably, microplate holders according to the present invention comprise two handles or protrusions, which are located on opposite sides of the holder. This allows the operator to stabilize the holder at either end, and with either their left or right hand.

In preferred embodiments of the present invention, the microplate holder according to the second aspect of the invention may be incorporated into an automated system such as an automated microplate preparation or screening system. Such systems are well known in the art, as discussed above.

A microplate holder in accordance with a second aspect of the present invention may be located on the conveyor of an automated system. A microplate is located on the microplate holder by an operator or robotic arm, and the plate is moved into position under the washer head. The microplate holder inclines the microplate during aspiration and/or dispensing of fluid. The system may further comprise a means for moving the microplate washer head laterally and vertically (either perpendicular to the horizontal; or at an angle to the horizontal, so that the upward and downward motion is 'diagonal'), as well as comprising a means for rotating the microplate washer head. This movement allows the washer head to be located accurately over the microplate; rotated so that it is aligned with the inclined microplate, and raised and lowered over the microplate in order effect aspiration and dispensing of fluid to and from the wells of the microplate.

The washer head may be rotated, moved vertically, or moved horizontally in any order in order to communicate with the microplate. For example, the washer head may be lowered to an appropriate height over the inclined microplate, and then rotated to align with the angle of inclination of the microplate. Alternatively the washer head may be moved horizontally so that it is correctly positioned above the inclined microplate, then rotated to align with the microplate, and then lowered to the appropriate height for aspiration or dispensing of fluid from/to the microplate, either perpendicularly to the horizontal, or in a diagonal downward motion. For repeated aspiration and dispensing steps, the washer head may re-position, so that aspiration is effected with the washer head tips at their lowest position, in an attempt to ensure that residual fluid is removed, with the tips raised slightly to allow dispensing of fluid.

According to the third aspect of the invention, there is provided an automated microplate device which can hold one or more microplates in an inclined position.

In certain embodiments according to the third aspect of the invention, the device comprises a conveyor which can be adjusted to the required angle of inclination and may hold one or more microplates.

The device may further comprise a microplate washer head which can be raised and lowered and/or rotated for interaction with a microplate in an inclined position. In certain embodiments, the washer head can be rotated to be aligned in parallel with the inclined conveyor and/or inclined microplate.

The inclination of the microplate on the conveyor may be fixed at a predetermined and desired inclination angle, or it may be variable. In preferred embodiments, variation in the angle of inclination can be achieved by raising one end of the conveyor on which the microplate is located from the horizontal. In some embodiments, raising and lowering of one end of the conveyor may be effected by a piston-driven mechanism, for example, one or more piston driven pins may be positioned underneath an end of the conveyor. The microplate is located on the conveyor, and as it approaches the washer head, or as it locates under the washer head, or once it is located under the washer head, a piston exerts pressure on the pin(s), causing them to extend. This has the effect of raising one end of the conveyor. The angle of inclination is determined by the length of the pins, and extent to which they extend, and these factors can be pre-set, to provide a desired angle of inclination. The microplate, which is located on the conveyor is raised to the required angle as the conveyor is raised.

In preferred embodiments, automated microplate devices according to a third aspect of the invention can be incorporated into known automated systems without undue difficulty, and/or without requiring significant modification to the system.

In preferred embodiments, an automated microplate device according to a third aspect of the invention further comprises a microplate washer head comprising bespoke pairs of pipette tips or 'pins', for use in aspirating and dispensing fluid to and from an inclined microplate.

In some embodiments the dispensing and aspirating tips protrude at an angle from the washer head rather than extending perpendicularly. For example, the pins may extend at between 88 and 45 degrees from the washer head. Angling of the pipette tips in this way can allow the tips to be more easily located in the microplate wells without requiring rotation of the washer head.

The bespoke tips or pins comprise a dispensing tip and an aspirating tip. Preferably, the dispensing tip is shorter than the aspirating tip. In preferred embodiments, the dispensing tip is also arranged so that the fluid released from the tip is directed towards the internal wall of the microplate well.

In some embodiments, the dispensing tip and aspirating tip are angled away from each other. In alternative embodiments, the dispensing tip is angled away from the vertical. In alternative embodiments, the dispensing tip comprises a bend or 'kink', so that the end of the tip is directed towards an internal wall of the microplate well.

In a fourth aspect, the present invention provides bespoke microplates which are shaped specifically to engage with a microplate holder according to the first aspect of the present invention. The microplates may be provided with indentations, recesses or grooves to complement the protrusions or raised areas provided on the microplate holder. Additionally or alternatively, the microplates may be provided with protrusions or raised areas to complement the indentations, recesses or grooves provided on the microplate holder. Such bespoke microplates can provide improved engagement between the microplate and holder and can increase the stability of the microplate in the inclined position.

In use, an inclined microplate will provide the manual operator or the automated system with a relatively small target area over which to introduce fluid into the well or to aspirate fluid from the well, due to collection of fluid within the well at the junction between the bottom of the well, and the wall of the well.

In a fifth aspect, the present invention provides the combined use of a microplate holder according to the second aspect of the invention or an automated microplate device according to the third aspect of the invention, with a microplate according to the first and/or fourth aspects of the present invention.

There are numerous advantages associated with the present invention. Providing a specific, discrete area for communication of the pipette tip with a microplate well, and/or a means of inclining the microplate, help to provide a target area for the automated system or operator to contact with the pipette tip, and controls and minimizes the area with which the pipette tip makes contact in the well of the microplate, thereby helping to ensure that in each well only the biological matter at the specific pipetting point, or in the immediate vicinity thereof, will be physically disrupted by the pipette tip. This not only reduces the number of cells scraped off per well, but standardizes the number of cells that are damaged or removed per well. As a result, the biological material, such as the number of cells, per well will be consistent across the microplate. This leads to an improvement in assay quality as it provides more reliable results, reduces the number of experimental repeats that are required, and reduces the number of false positives. All of these factors contribute to a reduction in the cost associated with the assay.

A further advantage achieved by the present invention is the improvement in fluid removal from the well. For example, it is easier for the operator or the automated system to remove fluid from wells if they are inclined, as a result of the collection of fluid at a single point in the well, namely at the junction between the wall of the well and the bottom of the well. This ensures that the amount of residual fluid per well is minimized. Residual amounts of assay buffer or reagents can dilute subsequently added solutions, and inhibit the development of assay substrates. For example, residual wash solution or buffer can affect ELISA substrate development, as discussed above. Residual levels of wash buffer can therefore reduce signal-to-noise ratio, and hence affect the (lower) Z' and Z-factors.

Providing an effective means for removing fluids from a microplate also obviates the need for the solutions to be tipped, flicked or banged out of the plate. This reduces the risk of damage to cells within the plate and minimizes the exposure of the user to the solutions being used in the assay. This can have significant health and safety benefits, particularly where the solutions being used are toxic.

Positioning the microplate at an angle, rather than it being held horizontally, also has the advantage that it improves the comfort of pipetting by decreasing the stress placed on the user's arm and/or wrist.

Providing a combination of a specific area for communication of the pipette tip with a microplate well, and a means of inclining the microplate, in accordance with the fifth aspect of the present invention, confers additional advantages over these aspects in isolation. For example, it is easier to remove fluid from wells if they are inclined, as a result of the collection of fluid at a single point in the well, namely at the junction between the wall of the well and the bottom of the well. In addition, the area for communication with the pipette tip is typically located at the point where fluid collects when the microplate is inclined by the microplate holder. This ensures that the user is guided to the best location within the well for fluid removal and that that the amount of residual fluid per well is minimized. This is particularly the case when using viscous solutions, complete or near complete removal of which is otherwise very difficult. In addition, inclination of the microplate, particularly to preferred angles according to the present invention, results in a very small part of the pipette tip coming into contact with the microplate well. This has the advantage of reducing the damage caused to biological material located in the well by the pipette tip. Furthermore, in embodiments where the area for communication involves the edges of pipette tip locating on both the wall and base of the microplate well, so that the point of the pipette tip 'bridges' the gap between a point on the well wall and a point on the well base, a channel for aspiration and dispensing of fluid is created, which reduces the chance of blockage of the pipette tip due to aggregation of biological materials. Further to this, inclination of the microplate enables improved communication of the pipette tip with the internal modifications in the wells, and locates fluid to the modifications, which further improves the introduction and aspiration of fluid from the wells. The inclined holder can also put the microplate in a position so that the internal modifications are at the lowest point of the well, and also directs the fluid to be aspirated to the lowest point in the well. The pipette tip is then guided to this lowest point, which means that further control of the pipette tip is exhibited, as it guided to the most favourable and/or most stable point in the well. This significantly or completely reduces engagement of the pipette tip with the well in such a manner that the aspirating/dispensing hole in the pipette tip is substantially covered or blocked, as would be the case if the pipette tip were to engage with the well in a perpendicular fashion (i.e. so that the hole is fully contacted with the well base/wall).

Finally, preferred embodiments of all aspects of the present invention decrease the amount of time required to introduce fluid to or aspirate fluid from a microplate in comparison to known means or systems for aspirating or introducing fluid which incur the same level of cellular damage to biological material located within the wells upon introduction/aspiration of fluid.

There are also several advantages associated with the use of the bespoke aspiration and dispensing pins discussed above in an automated system. The use of such pins reduces disruption to biological matter located within the wells by providing controlled and consistent aspiration and dispensing points, which are separated from each other, so that aspiration and introduction of fluids occurs at separate points within the microplate well. This reduces the damage caused to biological material located in the well, as any damage caused by aspiration is not exacerbated by introduction of fluid to the same point. Providing a dispensing pin which directs fluid towards the internal wall of the microplate well reduces flow of the fluid into the well, as well as the turbulence caused by introduction of the fluid to the well, and thus reduces the disruption caused to biological matter located in the well.

**Brief Description of the Figures**

Figure 1 shows a single well from a standard microplate in the conventional horizontal position, with a pipette tip introduced to aspirate or dispense solution. Figure 1A is cross-sectional view; Figure 1B shows plan view from above.

Figure 2 shows a single well from a microplate with areas for communication with a pipette tip, and a guide channel, in accordance with an embodiment of the first aspect of the present invention, with a pipette tip introduced to aspirate or dispense solution. Figure 2A is cross-sectional view; Figure 2B shows plan view from above.

Figure 3 demonstrates the effect of a pipette tip upon a monolayer of adherent cells which are growing on the bottom of a standard microplate well in the conventional horizontal position. Figures 3A, B and C show a cross-sectional view; Figures 3D, E, F show a plan view from above.

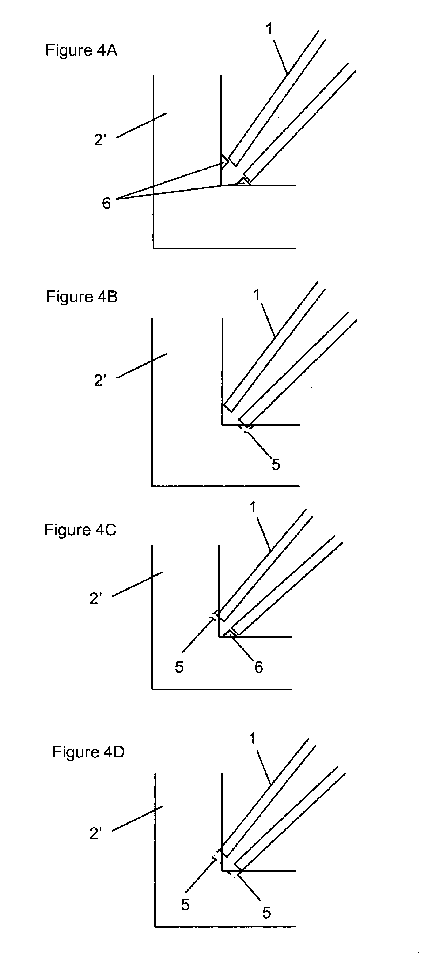

Figure 4 shows a cross-section through various microplates with areas for communication with a pipette tip in accordance with the first aspect of the present invention. Figure 4A demonstrates a microplate well wherein the area for communication with the pipette tip comprises two raised areas located on the base and wall of the well interior. Figure 4B demonstrates a microplate well wherein the area for communication with the pipette tip comprises an indentation located on the base of the well interior. Figure 4C demonstrates a microplate well wherein the area for communication with the pipette tip comprises a raised area located on the base of the well, and an indentation located on the wall of the well. Figure 4D demonstrates a microplate well wherein the area for communication with the pipette tip comprises indentations located on the base and the wall of the well interior.

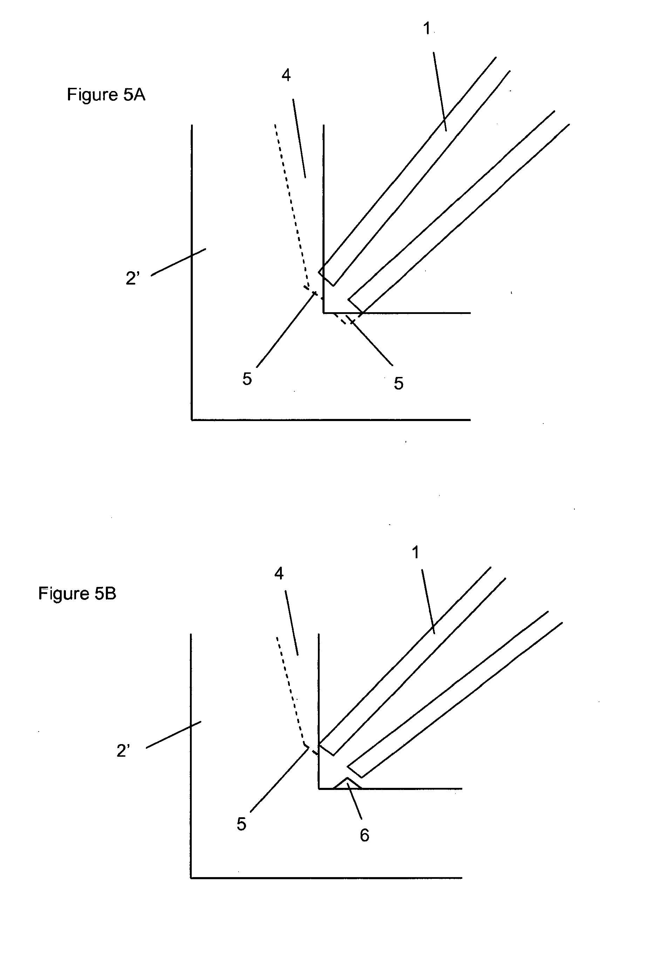

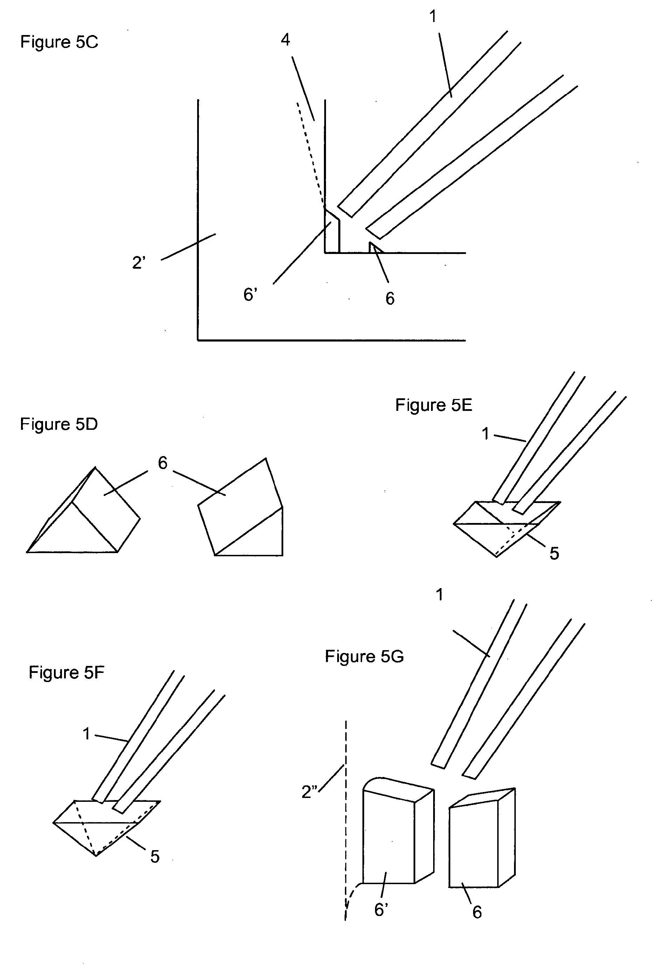

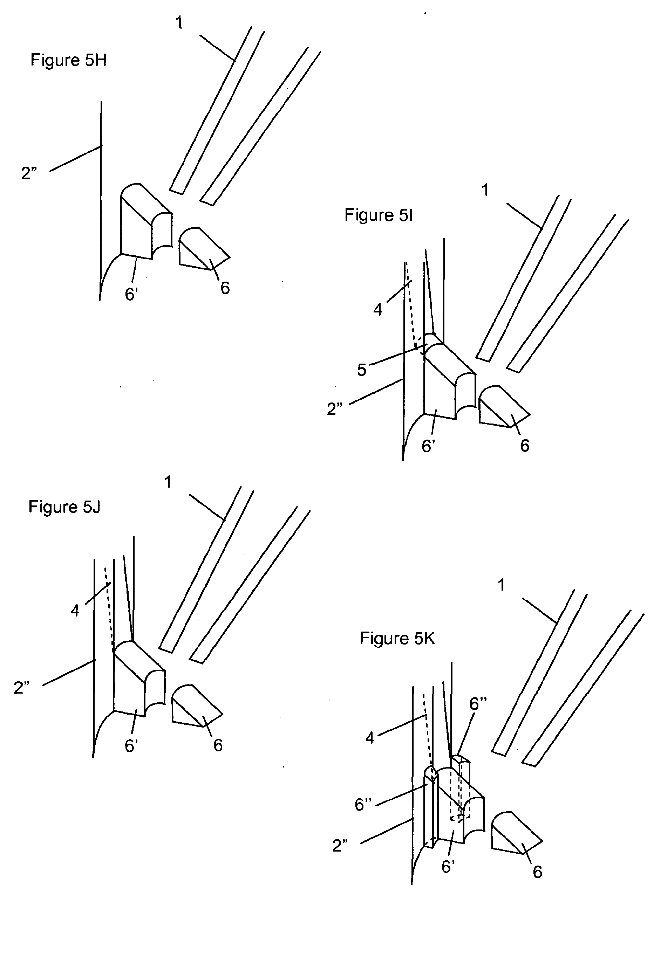

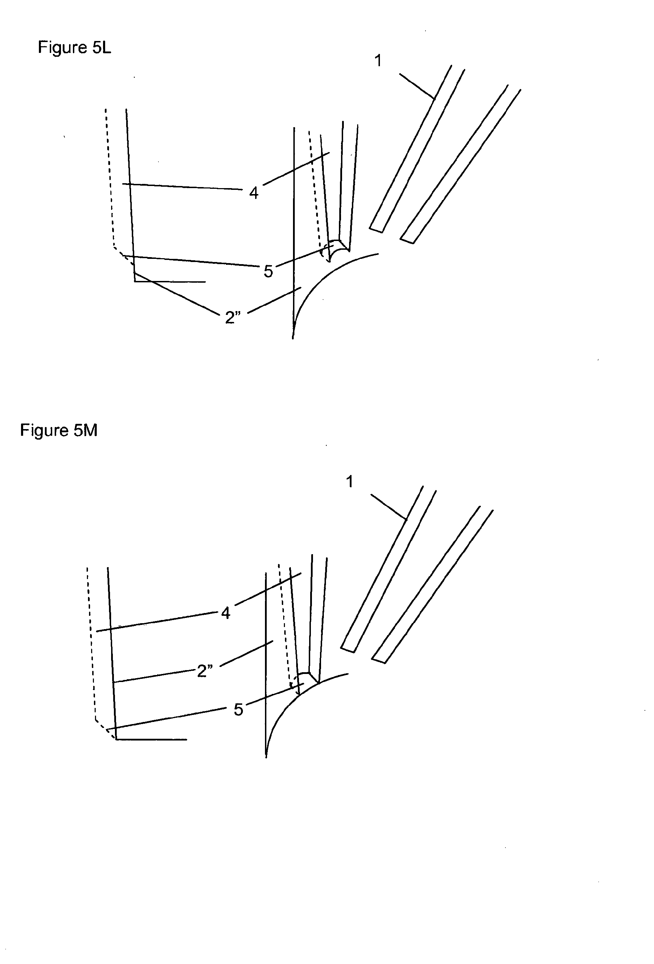

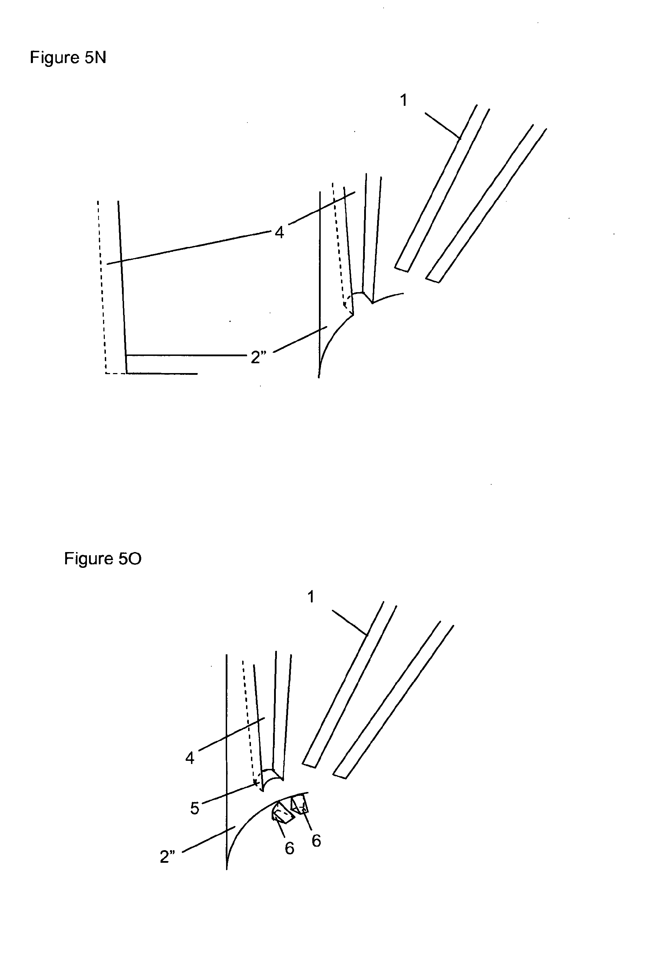

Figure 5 shows a cross-section through a microplate with areas for communication with a pipette tip, and a guide channel comprising a tapered indentation in the interior wall of the well in accordance with the first aspect of the present invention. In Figure 5A, the areas for communication with the pipette tip comprise one indentation located on the base of the well interior, and an indentation in the wall of the well interior; and a guide channel, wherein the end of the guide channel that is located near the base of the microplate well terminates in the indentation in the well wall. Figure 5B shows a microplate well wherein the areas for communication with the pipette tip comprise one raised area located on the base of the well interior, and an indentation in the wall of the well interior; and a guide channel, wherein the end of the guide channel which is located near the base of the microplate well terminates in the indentation in the well wall. Figure 5C shows a microplate well wherein the areas for communication with the pipette tip comprise raised areas located on the base of the well interior, wherein one of the raised areas is located at the junction between the bottom of the well and the wall of the well, and a guide channel, wherein the end of the guide channel which is located near the base of the microwell terminates in a raised area. Figure 5D shows, in 3-dimensional form, preferred shapes for the raised areas for location on the base of the well interior.

Figure 5E and F show, in 3-dimensional form, preferred shapes for the indentation located on the base of the well interior. Figure 5G provides, in 3-dimensional form, an example of two raised areas for location within a microplate well, wherein one of the raised areas is located at the junction between the bottom of the well and the wall of the well. Figure 5H provides an alternative example of two raised areas for location within a microplate well in 3-dimensional form, wherein one of the raised areas is located at the junction between the bottom of the well and the wall of the well. Figure 5I shows, in three-dimensional form, two raised areas for location within a microplate, wherein one of the raised areas is located at the junction between the bottom of the well and the wall of the well, and the other is located on the base of the well; and a guide channel, wherein the guide channel terminates in an indentation in the wall of the well, which communicates with the raised area located at the junction between the bottom of the well and the wall of the well.

Figure 5J shows, in three-dimensional form, two raised areas for location within a microplate, wherein one of the raised areas is located at the junction between the bottom of the well and the wall of the well; and the end of a guide channel, wherein the end of the guide channel terminates in the raised area located at the junction between the bottom of the well and the wall of the well. Figure 5K shows, in three-dimensional form, two raised areas located within a microplate on which the pipette tip can be located, a guide channel, and two additional raised areas located either side of the raised area which is located at the junction between the bottom of the well and the wall of the well. The additional raised areas prevent lateral movement of the pipette tip. Figure 5L shows, in three-dimensional and cross-sectional form, a microplate well wherein the area for communication with the pipette tip comprises an indentation in the wall of the well interior; and a guide channel, wherein the end of the guide channel which is located near the base of the microplate well terminates in the indentation in the well wall. Figure 5M shows, in three-dimensional and cross-sectional form, a microplate well wherein the area for communication with the pipette tip comprises an indentation in the wall of the well interior; and a guide channel, wherein the end of the guide channel which is located on the base of the microplate well terminates in the indentation in the well wall.

Figure 5N shows, in three-dimensional and cross sectional form, an indentation in the interior well wall forming a guide channel, wherein the end of the guide channel terminates at the base of the well. Figure 5O, shows in three-dimensional form, a microplate well wherein the areas for communication with the pipette tip comprise two raised areas located on the base of the well interior, and an indentation in the wall of the well interior; and a guide channel, wherein the end of the guide channel which is located near the base of the microplate well terminates in the indentation in the well wall.

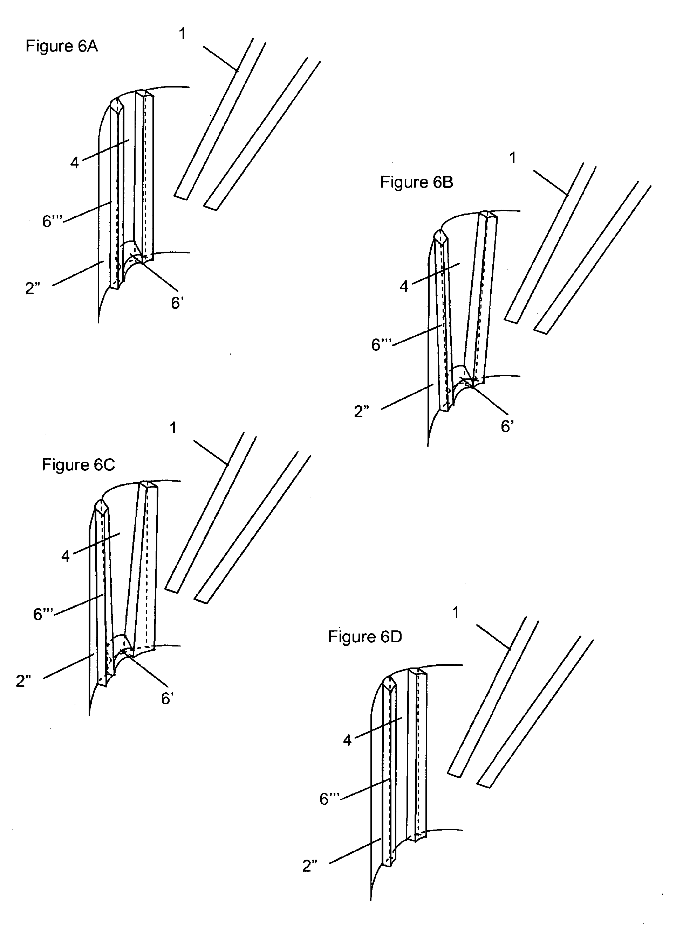

Figure 6 shows in three-dimensional form, a microplate with a guide channel comprising two raised areas on the interior wall of the microplate well. Figure 6A shows, in three-dimensional form, two raised areas located on the interior wall of the microplate well forming a guide channel, wherein the end of the guide channel terminates in a raised area located at the junction between the bottom of the well and the wall of the well. Figure 6B and C show, in 3-dimensional form, preferred shapes for the two raised areas forming a guide channel, wherein the end of the guide channel terminates in the raised area located at the junction between the bottom of the well and the wall of the well. Figure 6D shows, in 3-dimensional form, two raised areas located on the interior wall of the microplate well forming a guide channel, wherein the end of the guide channel terminates at the base of the well.

Figure 7A shows a cross-sectional view and a plan view (from above) of an embodiment of a microplate in accordance with the present invention, wherein the area for communication with a pipette tip comprises two raised areas located on the wall and the base of the microplate well. Figure 7B shows a cross-sectional view and a plan view (from above) of an embodiment of a microplate in accordance with the present invention wherein the area for communication with a pipette tip comprises two indentations located on the wall and the base of the microplate well.

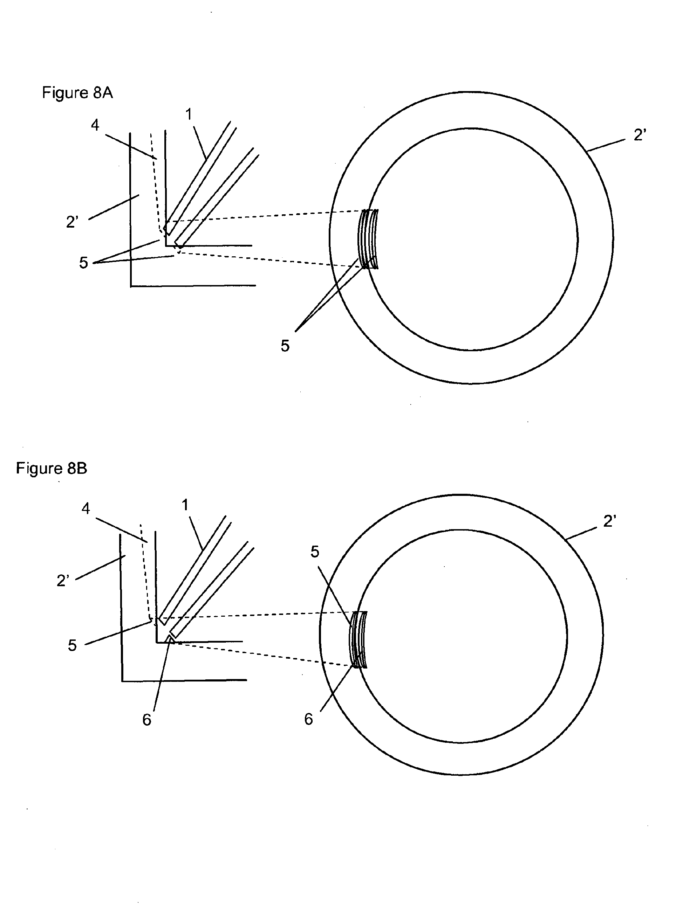

Figure 8A shows a cross-sectional view and a plan view (from above) of an embodiment of a microplate in accordance with the present invention, wherein the areas for communication with the pipette tip comprise two indentations located on the base and wall of the well interior; and a guide channel, wherein the end of the guide channel which is located near the base of the microplate well terminates in the indentation in the well wall. Figure 8B shows a cross-sectional view and a plan view (from above) of an embodiment of a microplate in accordance with the present invention, wherein the areas for communication with the pipette tip comprise one raised area located on the base of the well interior, and an indentation in the wall of the well interior; and a guide channel, wherein the end of the guide channel which is located near the base of the microplate well terminates in the indentation in the well wall.

Figure 9 demonstrates the effects of a pipette tip upon a monolayer of adherent cells which are growing on the bottom of a microplate well according to an embodiment of the first aspect of the present invention. Figures 9A, B and C show a cross-sectional view; Figures 9D, E, F show a plan view from above.

Figure 10 shows a cross-section view of a single well from a standard microplate, held in an inclined position, with the pipette tip held in a position to aspirate or dispense solution.

Figures 11A-F demonstrate the effects of a pipette tip upon a monolayer of adherent cells in standard microplate well when the microplate is being held in an inclined position. Figures 11A, 11B and 11C show a cross-sectional view; Figures 11D, 11E and 11F show a plan view from above.

Figure 12 shows a cross-sectional view of a microplate located on a microplate holder in accordance with the second aspect of the present invention, and a corresponding plan view of the microplate, as inclined

Figure 12A shows a 3-dimensional view of a microplate holder in accordance with an embodiment of the second aspect of the invention, comprising two handles, as a means for stabilizing the holder.

Figures 13 and 14A show cross-section views of microplates located on various microplate holders in accordance with the second aspect of the present invention.

Figures 14B and C provide details of a means for securing the microplate to the microplate holder, in accordance with the second aspect of the present invention.

Figures 15-17 show cross-section views of microplates located on various microplate holders in accordance with the second aspect of the present invention, and corresponding plan views of the microplate, as inclined. Figures 15A-C show alternative embodiments for inclining a microplate.

Figures 18-19 show cross-section views of microplates located in various microplate holders in accordance with the second aspect of the present invention when used in an automated system, and corresponding plan views of the microplate, as inclined.

Figures 18A show a cross-sectional view of an alternative washerhead for use in an automated system, comprising angled washer pins.

Figure 20 shows a cross-sectional view of a microplate in an automated system in accordance with the third aspect of the present invention, and a corresponding plan view of the plate, as inclined. Figure 20A illustrates various ways in which a washer head in an automated system may be manipulated in order to communicate with an inclined microplate.

Figures 21A and B show a pair of washer pins as used on a standard washer head in an automated system.

Figures 22A and D show pairs of bespoke washer pins in accordance with the second aspect of the present invention.

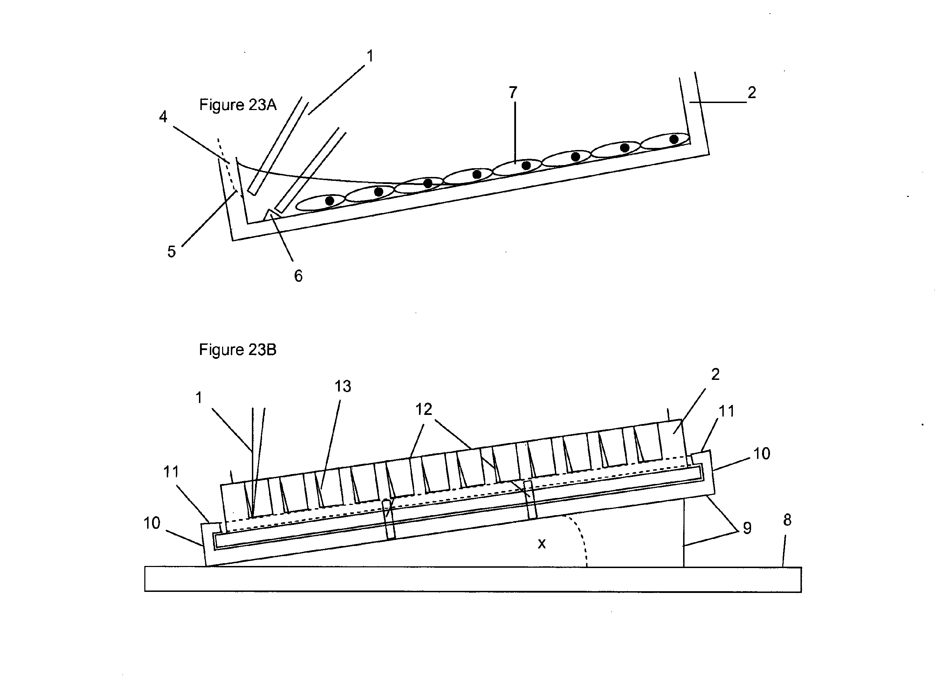

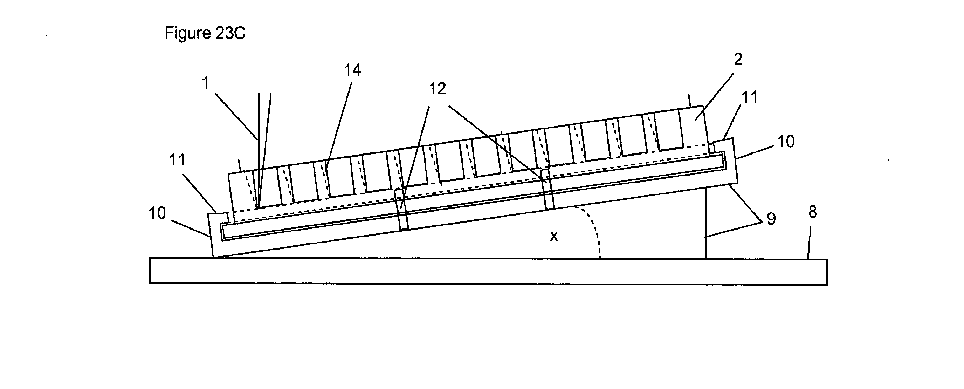

Figure 23A shows a single well of a microplate held in an inclined position, the microplate well comprising a guide channel comprising an indentation, and a raised area for communication with a pipette tip, in accordance with the first aspect of the present invention. Figure 23B and C shows an embodiment of the invention in accordance with the fifth aspect of the present invention. Figure 23B shows a cross-sectional view of a microplate, wherein each well comprises a guide channel comprising a raised area on the wall of the well interior, in accordance with a first aspect of the present invention. The microplate is located on a microplate holder in accordance with the second aspect of the present invention. Figure 23C shows a cross-sectional view of a microplate, wherein each well comprises a guide channel comprising an indent in the wall of the well interior, in accordance with a first aspect of the present invention. The microplate is located on a microplate holder in accordance with the second aspect of the present invention.

**Detailed Description of the Figures**

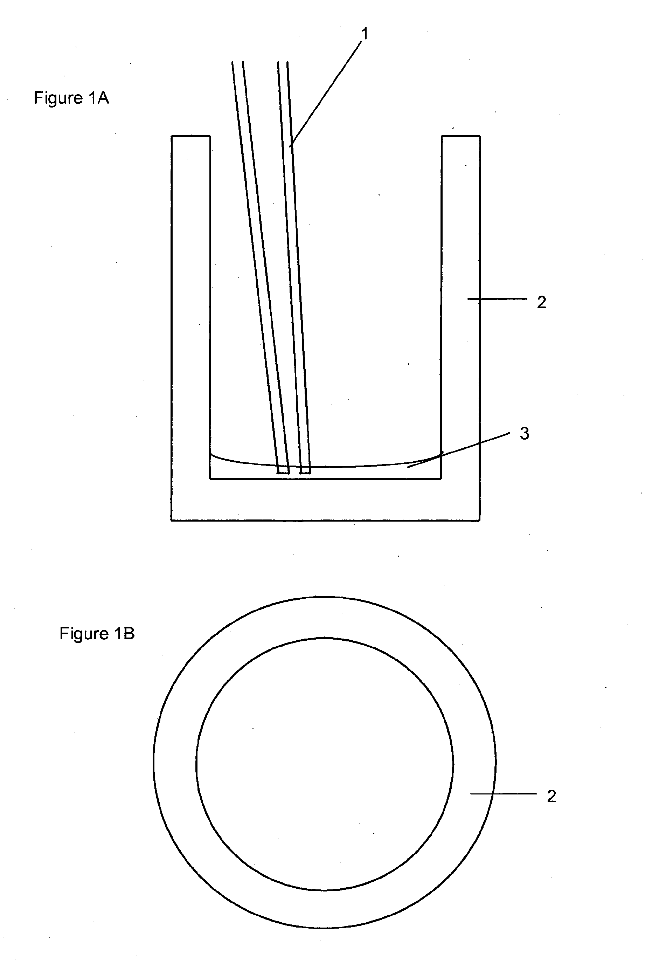

In Figure 1, a pipette tip 1 is introduced into a standard microplate well 2 to remove residual liquid 3.

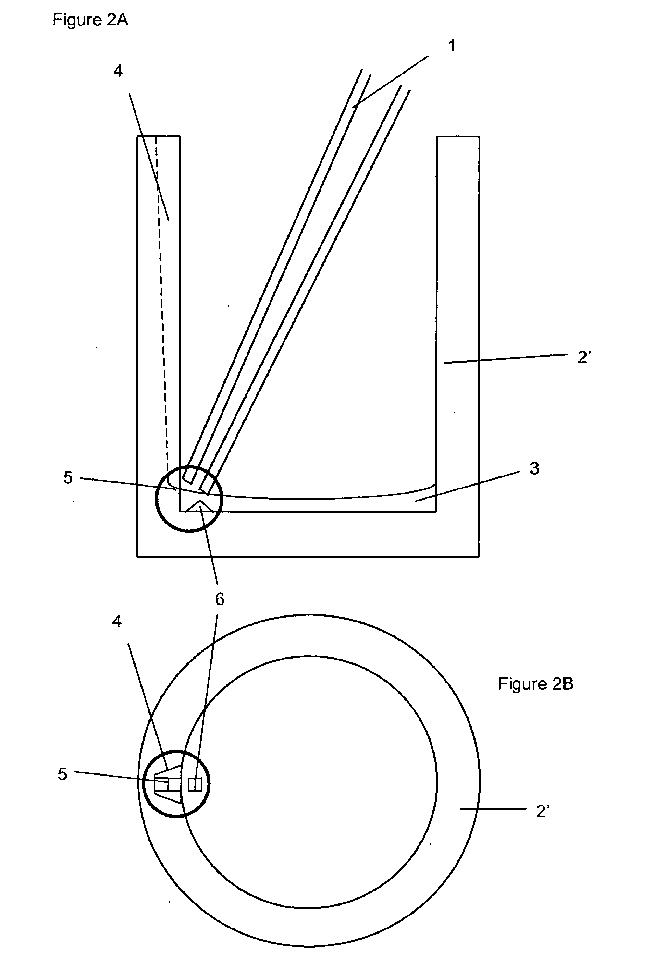

In Figure 2, a pipette tip 1 is introduced into a microplate well in accordance with an embodiment of the first aspect of the present invention 2' to remove residual liquid 3. The well has a tapered guide channel 4, wherein the end of the guide channel which is located near the base of the microplate well terminates in the indentation in the well wall 5. The areas for communication with the pipette tip comprise the indentation located on the wall of the well interior 5, and the raised area located on the base of the well, 6.

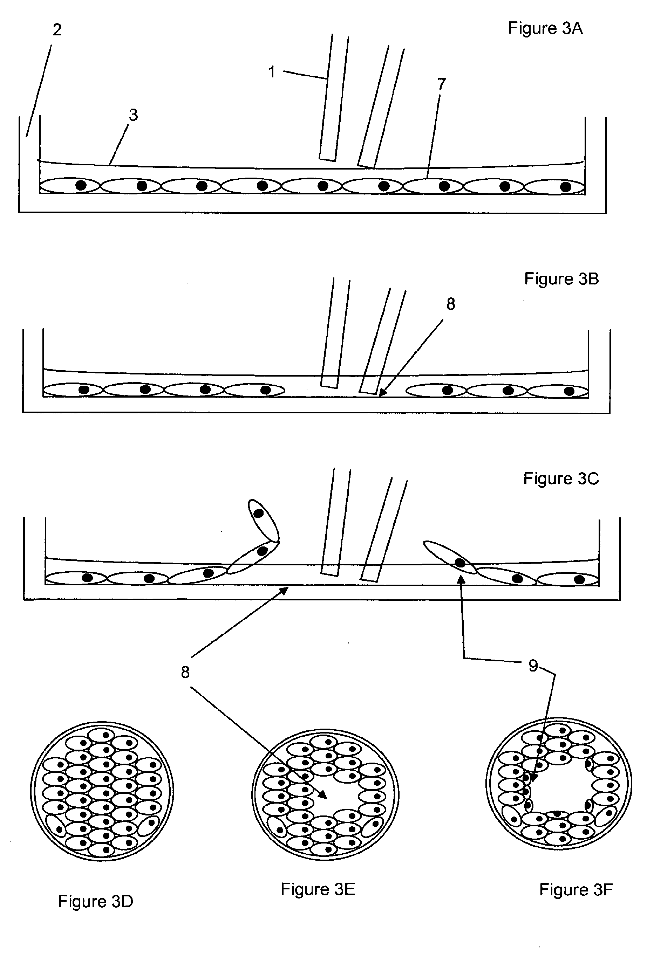

In Figure 3A, a pipette tip 1 is introduced to a microplate well 2 containing a monolayer of adherent cells 4, to remove the residual fluid 3.

In Figures 5B and 3C, the pipette tip contacts the base of well, scraping and dislodging the cells, resulting in removal of some of the cells from an area of the base of the well 5. In addition, some of the cells are dislodged from the base of the well, but remain attached to cells which are affixed to the base of the well 6. These cells could detach from the well upon aspiration.

A demonstration of the cell distribution before introduction of the pipette tip is provided by Figure 3D. A demonstration of the damage that can be caused to the cells by the introduction of the pipette tip is provided by Figures 3E and 3F.

An illustration of the cell distribution before introduction of the pipette tip is provided by Figure 3D. An illustration of the damage that can be caused to the cells by the introduction of the pipette tip is provided by Figures 3E and F.

In Figure 4A, a microplate well in accordance with an embodiment of the first aspect of the present invention 2' has two raised areas 6. One raised area is located on the well wall, and the other is located on the well base. The raised areas are spaced so that when the pipette tip 1 is introduced, the edges of the pipette tip rest on the raised areas, so that a channel is formed between the pipette tip and the raised areas for the release and aspiration of fluid.

Figure 4B shows a microplate well in accordance with an embodiment of the first aspect of the present invention 2' with an indentation 5 located on the well base. An edge of the pipette tip 1 can be located within the indentation 5, whilst the other edge of the pipette tip rests against the well wall.

Figure 4C shows a microplate well in accordance with an embodiment of the first aspect of the present invention 2' with one raised area 6 located on the well base and one indentation 5 located on the well wall. The raised area and indentation are spaced so that when the pipette tip 1 is introduced, the edges of the pipette tip rest on the raised area 6 and in the indentation 5, so that a channel is formed between the pipette tip 1 and the areas for communication with the tip of a pipette 5 and 6, for the release and aspiration of fluid.

Figure 4D shows a microplate well in accordance with an embodiment of the first aspect of the present invention 2' with two indentations 5 located on the well base and wall. The indentations are spaced so that the pipette tip 1 can be located within the indentations, thereby forming a channel between the pipette tip 1 and the areas for communication with the tip of a pipette, for the release and aspiration of fluid.

Figure 5A shows a microplate well in accordance with an embodiment of the first aspect of the present invention 2' with a guide channel 4 comprising a tapered indentation in the interior wall of the well, wherein the end of the guide channel that is located near the base of the microplate well terminates in an indentation 5 which acts as an area for communication with the pipette tip 1; and a further indentation 5 located on the base of the well, so that the pipette tip 1 can be introduced to the well via the guide channel 4, and located in the two indentations 5 on the wall and base of the well, thereby forming a channel between the pipette tip 1 and the areas for communication with the tip of a pipette, for the release and aspiration of fluid.

Figure 5B shows a microplate well 2' in accordance with an embodiment of the first aspect of the present invention, designed, in particular, to prevent lateral movement of the pipette tip once located for aspiration or dispensing of fluid. The well comprises a guide channel 4 comprising a tapered indentation in the interior wall of the well, wherein the end of the guide channel that is located near the base of the microplate well terminates in an indentation 5 which acts as an area for communication with the pipette tip 1; and a raised area 6 located on the base of the well, so that the pipette tip 1 can be introduced to the well via the guide channel 4, and located in the indentation 5 on the wall of the well, and the raised area 6 on the base of the well, thereby forming a channel between the pipette tip 1 and the areas for communication with the tip of a pipette, for the release and aspiration of fluid.

Figure 5C shows a microplate well in accordance with an embodiment of the first aspect of the present invention 2' with a guide channel 4 comprising a tapered indentation in the interior wall of the well, wherein the end of the guide channel that is located near the base of the microplate well terminates in a raised area 6' which acts as an area for communication with the pipette tip 1, and a further raised area 6 located on the base of the well, so that the pipette tip 1 can be introduced to the well via the guide channel 4, and located on the raised areas 6' and 6, thereby forming a channel between the pipette tip 1 and the areas for communication with the tip of a pipette for the release and aspiration of fluid.

Figure 5D shows, in three dimensional form, two preferred approximately pyramidal shapes for the raised areas 6 for location on the base of the well interior which can act as an area for communication with a pipette tip 1. Figure 5E and F show, in three dimensional form, preferred, approximately pyramidal shapes for the indentation 5 for location on the base of the well interior, which can act as an area for communication with a pipette tip 1.

Figure 5G provides a three-dimensional depiction of the interior surface of a microplate well in accordance with a first aspect of the present invention 2" with two raised areas 6' and 6 located in the well interior, wherein one raised area 6' is located at the junction between the bottom of the well and the wall of the well, and the other 6 is located on the base of the well interior, wherein the raised areas act as areas for communication with a pipette tip 1 and form a channel between the pipette tip 1 and the raised areas 6' and 6 for the release and aspiration of fluid.

Figure 5H provides an alternative three-dimensional depiction of the interior surface of a microplate well in accordance with a first aspect of the present invention 2" with two raised areas 6' and 6 located in the well interior, wherein one raised area 6' is located at the junction between the bottom of the well and the wall of the well, and the other 6 is located on the base of the well interior, wherein the raised areas act as areas for communication with a pipette tip 1 and form a channel between the pipette tip 1 and the raised areas 6' and 6 for the release and aspiration of fluid.

Figure 5I provides a three-dimensional depiction of the interior surface of a microplate well in accordance with a first aspect of the present invention 2" with a guide channel 4 comprising a tapered indentation in the interior wall of the well, wherein the end of the guide channel that is located near the base of the microplate well terminates in an indentation 5 which communicates with a raised area 6', which is located at the junction between the bottom of the well and the wall of the well; a second raised area 6 is located on the base of the well interior. The pipette tip 1 can be introduced to the well via the guide channel 4, and located on the indentation 5 on the wall of the well and the raised area 6, or on the two raised areas 6' and 6, in either case forming a channel between the pipette tip 1 and the areas for communication with the tip of a pipette, for the release and aspiration of fluid. At least partial location of the pipette tip in the indentation 5 in the wall of the well prevents lateral movement of the pipette tip.

Figure 5J provides a three-dimensional depiction of the interior surface of a microplate well in accordance with a first aspect of the present invention 2" with a guide channel 4 comprising a tapered indentation in the interior wall of the well, wherein the end of the guide channel that is located near the base of the microplate well terminates in a raised area 6', which is located at the junction between the bottom of the well and the wall of the well with a second raised area 6 located on the base of the well interior. The pipette tip 1 can be introduced to the well via the guide channel 4, and located on the two raised areas 6' and 6, forming a channel between the pipette tip 1 and the areas for communication with the tip of a pipette, for the release and aspiration of fluid.

Figure 5K provides a three-dimensional depiction of the interior surface of a microplate well in accordance with a first aspect of the present invention 2" with a guide channel 4 comprising a tapered indentation in the interior wall of the well, wherein the end of the guide channel that is located near the base of the microplate well terminates in a raised area 6', which is located at the junction between the bottom of the well and the wall of the well with a second raised area 6 located on the base of the well interior, and two additional raised areas 6"', located either side of the raised area which is located at the junction between the bottom of the well and the wall of the well 6'. The pipette tip 1 can be introduced to the well via the guide channel 4, and located on the two raised areas 6' and 6, forming a channel between the pipette tip 1 and the areas for communication with the tip of a pipette, for the release and aspiration of fluid. The additional raised areas 6"' prevent lateral movement of the pipette tip once it has been located on raised areas 6 and 6'.

Figure 5L provides a three-dimensional and cross-sectional depiction of the interior surface of a microplate well in accordance with a first aspect of the present invention 2" with a guide channel 4 comprising an indentation in the interior wall of the well, which is wider at the lip of the well, and narrower at the base of the well, wherein the end of the guide channel that is located near the base of the microplate well terminates in an indentation 5. The pipette tip 1 can be introduced to the well via the guide channel 4, and located on the indentation 5 on the wall of the well. The cross-sectional depiction shows a guide channel 4 that is of uniform depth into the well wall from the lip of the well until the point of communication with the pipette tip at indentation 5.

Figure 5M provides a three-dimensional and cross-sectional depiction of the interior surface of a microplate well in accordance with a first aspect of the present invention 2" with a guide channel 4 comprising an indentation in the interior wall of the well, which is wider at the lip of the well and narrower at the base of the well, wherein the end of the guide channel that is located on the base of the microplate well terminates in an indentation 5. The pipette tip 1 can be introduced to the well via the guide channel 4, and located on the indentation 5 on the wall of the well. The cross-sectional depiction shows a guide channel 4 that is of uniform depth into the well wall from the lip of the well until the point of communication with the pipette tip at indentation 5.

Figure 5N provides a three-dimensional and cross-sectional depiction of the interior surface of a microplate well in accordance with the present invention 2" with a guide channel 4 comprising an indentation in the interior wall of the well, which is wider at the lip of the well and narrower at the base of the well, wherein the end of the guide channel terminates on the base of the well. The pipette tip 1 can be introduced to the well via the guide channel 4, and located on the base of the microplate well. The cross-sectional depiction shows a guide channel 4 that is of uniform depth into the well wall-from the lip of the well until the point of communication with the pipette tip.

Figure 5O provides a three-dimensional depiction of the interior surface of a microplate well in accordance with the present invention 2" with a guide channel 4 comprising an indentation in the interior wall of the well, which is wider at the lip of the well and narrower at the base of the well, wherein the end of the guide channel that is located near the base of the microplate well terminates in an indentation 5; raised areas 6 are located on the base of the well interior. The pipette tip 1 can be introduced to the well via the guide channel 4, and located on the indentation 5 on the wall of the well, or on the two raised areas 6, in either case forming a channel between the pipette tip 1 and the areas for communication with the tip of a pipette, for the release and aspiration of fluid. At least partial location of the pipette tip in the indentation 5 in the wall of the well, or on the two raised areas 6, prevents lateral movement of the pipette tip.

Figure 6A provides a three-dimensional depiction of the interior surface of a microplate well in accordance with a first aspect of the present invention 2" with a guide channel 4 formed by substantially parallel raised areas 6"', wherein the end of the guide channel that is located near the base of the microplate well terminates in a raised area 6', which is located at the junction between the bottom of the well and the wall of the well. The pipette tip 1 can be introduced to the well via the guide channel 4, and located on the raised areas 6'.

Figure 6B provides an alternative three-dimensional depiction of the interior surface of a microplate well in accordance with a first aspect of the present invention 2" with a guide channel 4 formed by raised areas 6"' of the same cross-sectional area at the lip and base of the well but angled to the vertical to create a channel that is wider at the lip of the well than at the base, wherein the end of the guide channel that is located near the base of the microplate well terminates in a raised area 6', which is located at the junction between the bottom of the well and the wall of the well. The pipette tip 1 can be introduced to the well via the guide channel 4, and located on the raised areas 6'.

Figure 6C provides an alternative three-dimensional depiction of the interior surface of a microplate well in accordance with the present invention 2" with a guide channel 4 formed by raised areas 6"' of differing cross-sectional size, being smaller at the lip and larger at the base to create a channel that is wider at the lip of the well than at the base, wherein the end of the guide channel that is located near the base of the microplate well terminates in a raised area 6', which is located at the junction between the bottom of the well and the wall of the well. The pipette tip 1 can be introduced to the well via the guide channel 4, and located on the raised areas 6'.

Figure 6D provides a three-dimensional depiction of the interior surface of a microplate well in accordance with the present invention 2" with a guide channel 4 formed by raised areas 6"', wherein the end of the guide channel that is located near the base of the microplate well terminates at the base of the microplate well. The pipette tip 1 can be introduced to the well via the guide channel 4, and located on the base of the microplate well.

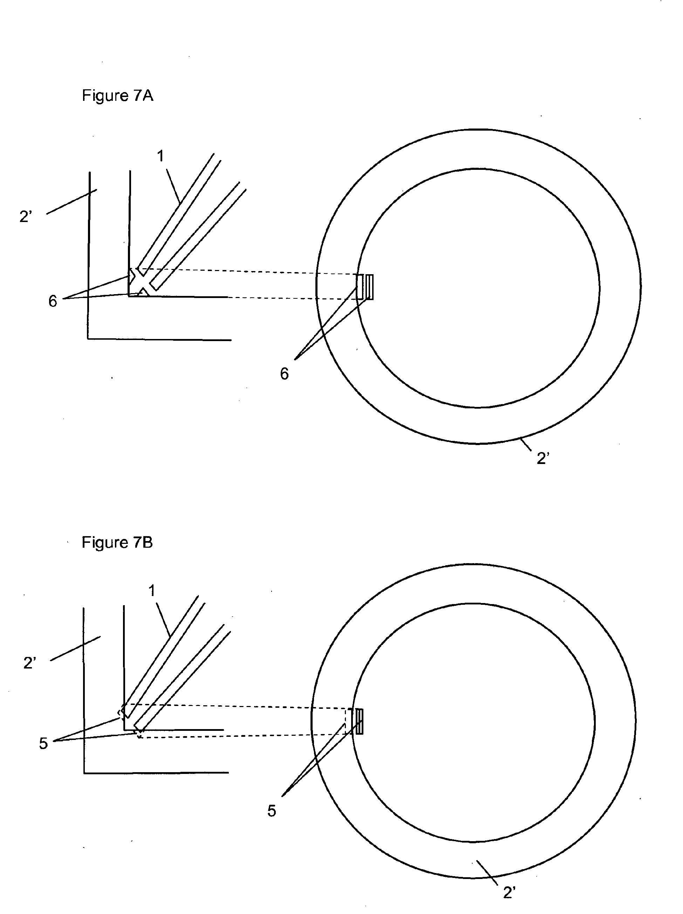

Figure 7A shows a cross-sectional view and a plan view (from above) of a microplate well in accordance with an embodiment according to a first aspect of the present invention 2', wherein the area for communication with a pipette tip comprises two raised areas 6 located on the wall and the base of the microplate well. The raised areas are spaced so that when the pipette tip 1 is introduced, the edges of the pipette tip rest on the raised areas, so that a channel is formed between the pipette tip and the raised areas for the release and aspiration of fluid.

Figure 7B shows a cross-sectional view and a plan view (from above) of a microplate well in accordance with an embodiment according to a first aspect of the present invention 2', wherein the area for communication with a pipette tip comprises two indentations located on the wall and the base of the microplate well. The indentations are spaced so that when the pipette tip 1 is introduced, the edges of the pipette tip rest in the indentations, so that a channel is formed between the pipette tip and the indentations for the release and aspiration of fluid.

Figure 8A shows a cross-sectional view and a plan view (from above) of a microplate well 2' in accordance with an embodiment according to a first aspect of the present invention with a guide channel 4 comprising a tapered indentation in the interior wall of the well, wherein the end of the guide channel that is located near the base of the microplate well terminates in an indentation 5 which acts as an area for communication with the pipette tip 1; and a further indentation 5 located on the base of the well, so that the pipette tip 1 can be introduced to the well via the guide channel 4, and located in the two indentations 5 on the wall and base of the well, thereby forming a channel between the pipette tip 1 and the areas for communication with the tip of a pipette, for the release and aspiration of fluid.

Figure 8B shows a cross-sectional view and a plan view (from above) of a microplate well 2' in accordance with an embodiment according to a first aspect of the present invention with a guide channel 4 comprising a tapered indentation in the interior wall of the well, wherein the end of the guide channel that is located near the base of the microplate well terminates in an indentation 5 which acts as an area for communication with the pipette tip 1; and a raised area 6 located on the base of the well, so that the pipette tip 1 can be introduced to the well via the guide channel 4, and located in the indentation 5 on the wall of the well, and the raised area 6 on the base of the well, thereby forming a channel between the pipette tip 1 and the areas for communication with the tip of a pipette, for the release and aspiration of fluid.

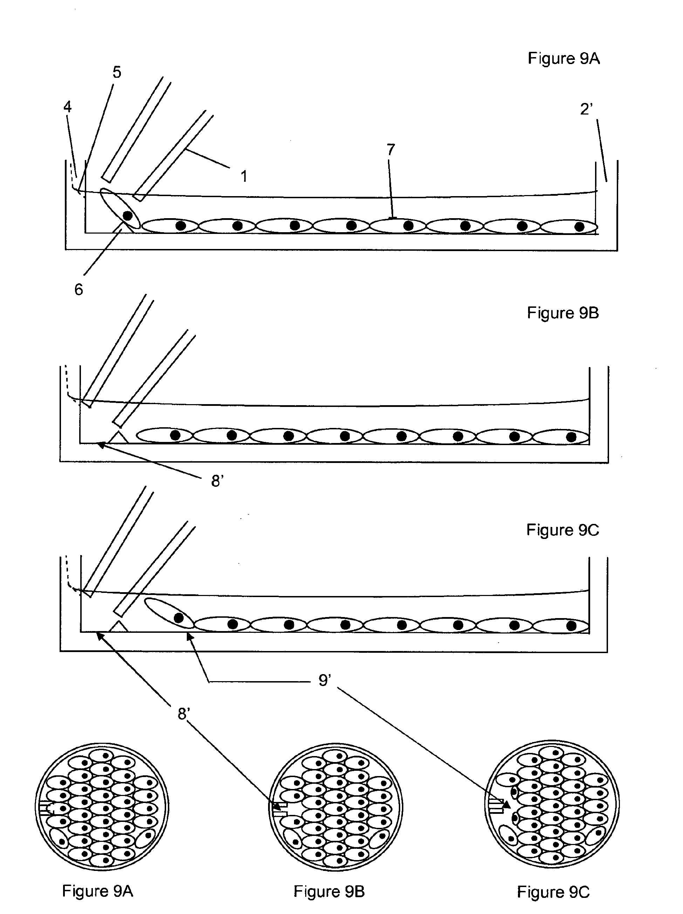

In Figures 9A-C, a pipette tip 1 is introduced to a microplate well 2', in accordance with a first aspect of the present invention which contains a monolayer of adherent cells 7, via a guide channel 4, which terminates in an indentation 5. The well has a raised area 6 located on the well base. The indentation 5 and the raised area 6 are spaced so that the edges of the pipette tip 1 can be located in the indentation 5 and on the raised area 6. Contact with the well base is, therefore, avoided.

As shown in Figures 9D-F, the number of cells are disrupted by the introduction of the pipette 1, either resulting in complete removal from the well 8', or partial dislodging of the cells which then remain attached to cells which remain affixed to the base of the well 9' is minimized.

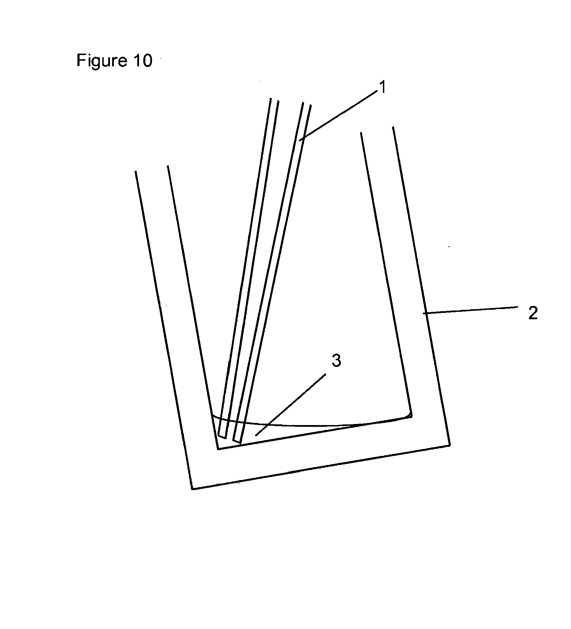

Figure 10 demonstrates the effect of holding the microplate in an inclined position. The pipette is able to extract the fluid more easily and completely as the tip can be more readily positioned in the most appropriate part of the well, into which the fluid is being encouraged to flow.

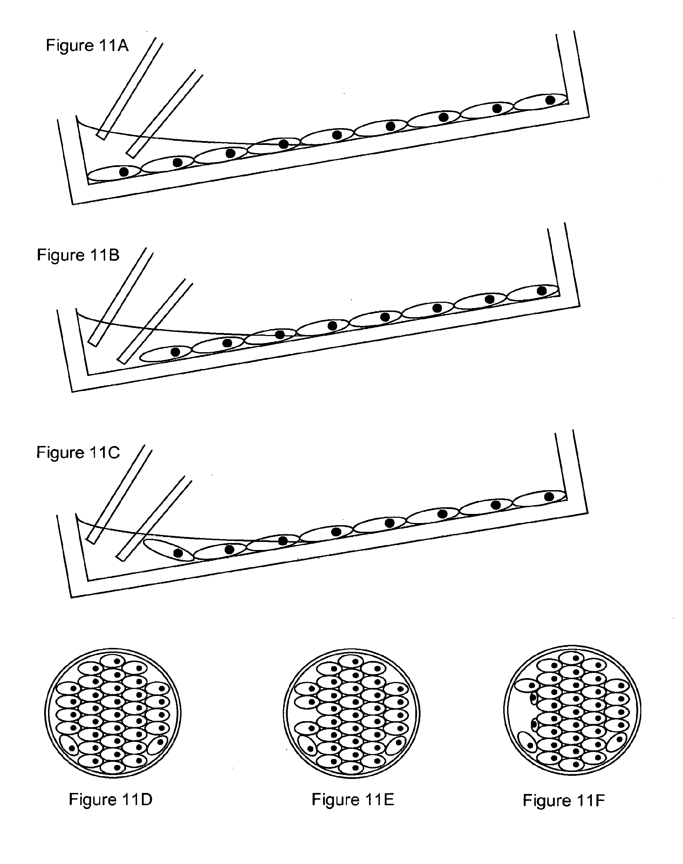

Figure 11A demonstrates the effect of holding the microplate in an inclined position. In Figures 11A, 11B and 11C, the pipette tip contacts the base of well. However, as the pipette tip is directed to a specific area of the well by the inclination of the microplate, there is reduced and more localised scraping and dislodging of cells, resulting in removal of fewer cells from an area of the base of the well 5. In addition, fewer cells 6 are dislodged from the base of the well and are potentially lost upon aspiration.

A demonstration of the cell distribution before introduction of the pipette tip is provided by Figure 11D. A demonstration of the reduced damage that can be caused to the cells by the introduction of the pipette tip when the microplate is held in an inclined position is provided by Figures 11E and 11F.

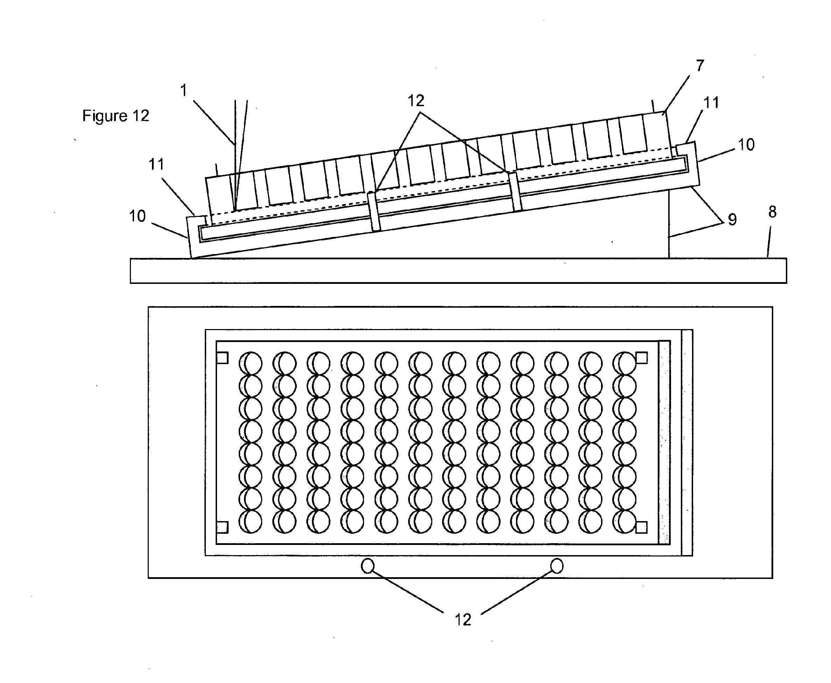

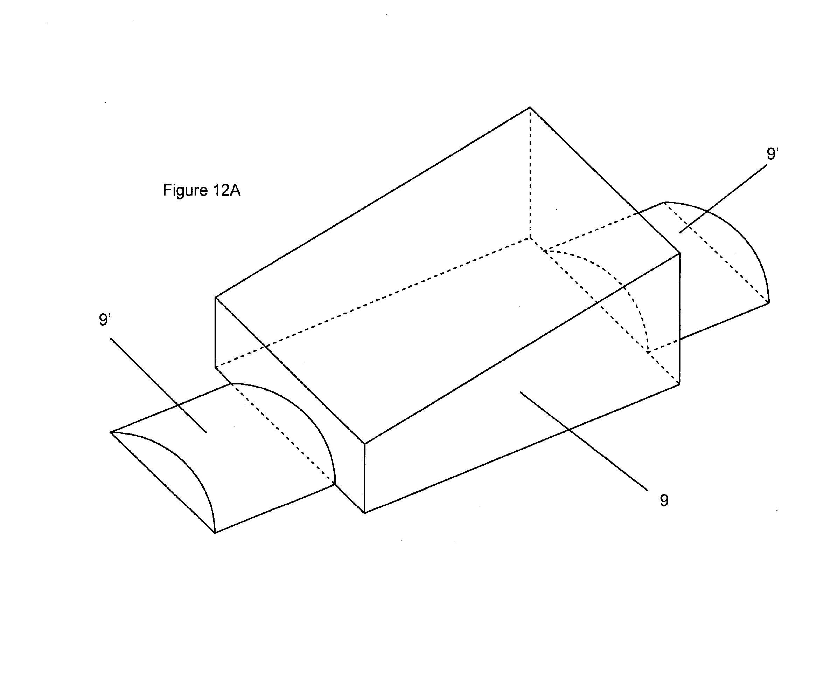

In Figure 12, a pipette tip 1 is introduced into a well of a microplate 7, which is being held in an inclined position by a microplate holder in accordance with a second aspect of the present invention. The microplate holder comprises a base portion 8, a means for inclining the microplate in the form of an inclined platform 9, and a means for securing the microplate to the platform in the form of two raised outer edges 10 on the platform 9 which have an overhang 11, forming a groove into which the lip of the microplate fits, thereby preventing lateral or upward movement of the microplate. The microplate is slid into position on the platform by communication with the internal surfaces of the raised outer edges. The microplate further comprises holes into which securing pins, 12, which can be inserted once the microplate is in position, in order to prevent lateral movement of the plate.

Figure 12A shows a microplate holder comprising an inclined platform 9, with handles 9' located at the lower aspect on either side of the holder. The handles provide a means for the operator to stabilize the holder by placing a hand on or over one of the handles and exerting downward pressure.

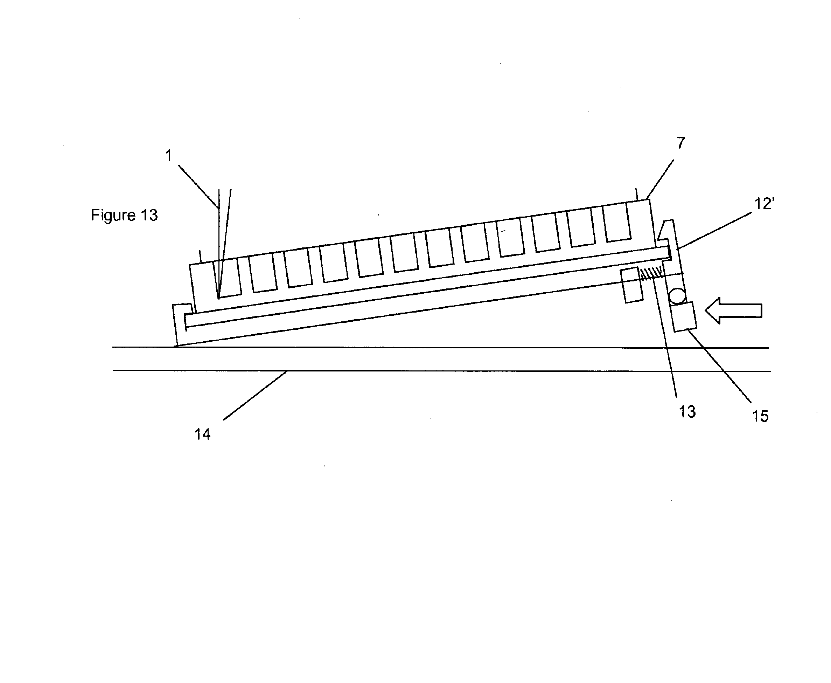

In Figure 13, the microplate 7 is being held in an inclined position by a microplate holder in accordance with a second aspect of the present invention. The microplate holder comprises a means for securing the microplate to the microplate holder in the form of a spring-loaded clip 12'. Pressure on the clip lever 15 by the user in the direction of the arrow causes extension of the spring 13 to which the clip is attached, causing the clip to open and allowing the microplate to be placed in the holder and, when the clip is returned to its rest position, it holds the microplate in place. The microplate holder may be located directly on a surface such as a laboratory bench 14, by resting one edge of the inclined platform on this surface.

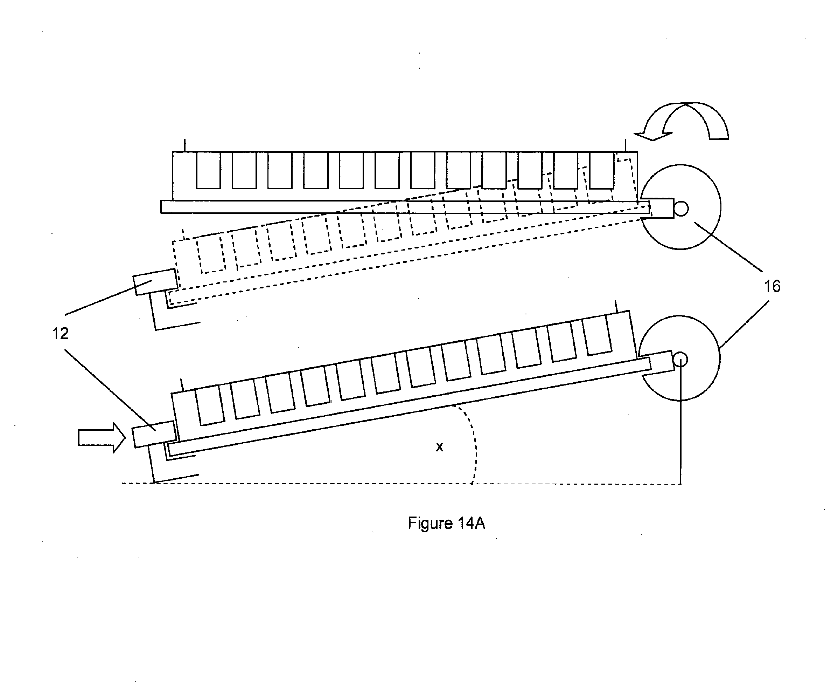

Figure 14A shows alternative means for securing the microplate to the microplate holder, in the form of a rotating clip 16, into which one edge of the microplate can be inserted. Once the microplate is thus engaged with the microplate holder, the microplate may be moved to an inclined position, with a further edge of the microplate being held in position by a slider or spring loaded clip 12.

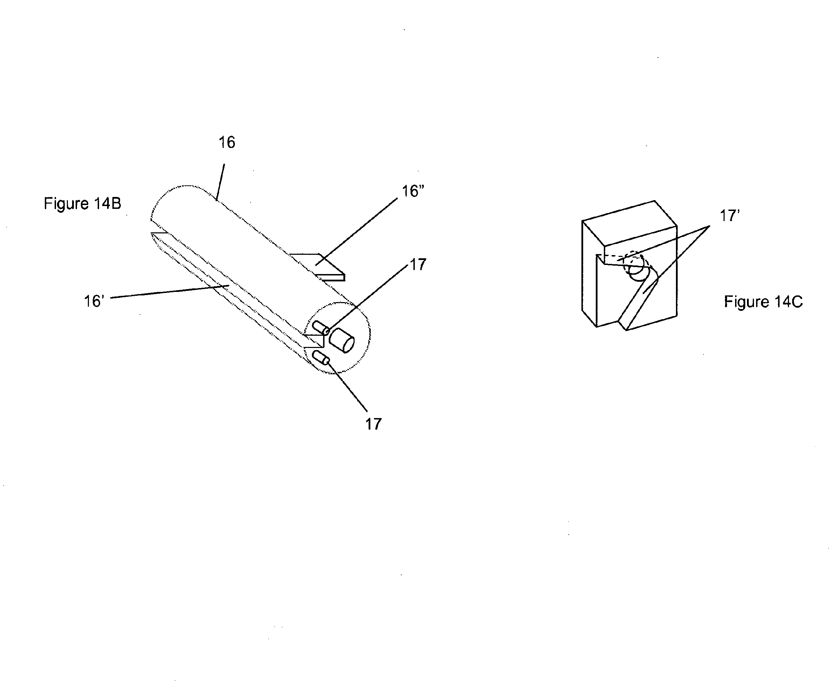

Figure 14B shows, in 3-dimensional form, further details of the rotating clip shown in Figure 14A. The cylinder 16 comprises an opening 16' into which one edge of the microplate can be inserted. The cylinder can then be rotated downwards, to allow the microplate to be moved into an inclined position. Two pins 17 interact with an aspect of the microplate holder in order to restrict the movement of the cylinder between two positions: a raised position which allows insertion of an edge of the microplate, and a lowered position which places the microplate at the required angle inclination. A handle, 16" allows easier movement of the cylinder by the operator.

Figure 14C shows, in 3-dimensional form, an alternative means for restricting the movement of a cylindrical rotating clip, comprising a shaped guide which forms part of the microplate holder. The cylinder is located in the guide, and the cylinder and microplate, once inserted, communicate with the guide at the extremes of rotation 17', thus preventing free rotation of the cylinder.

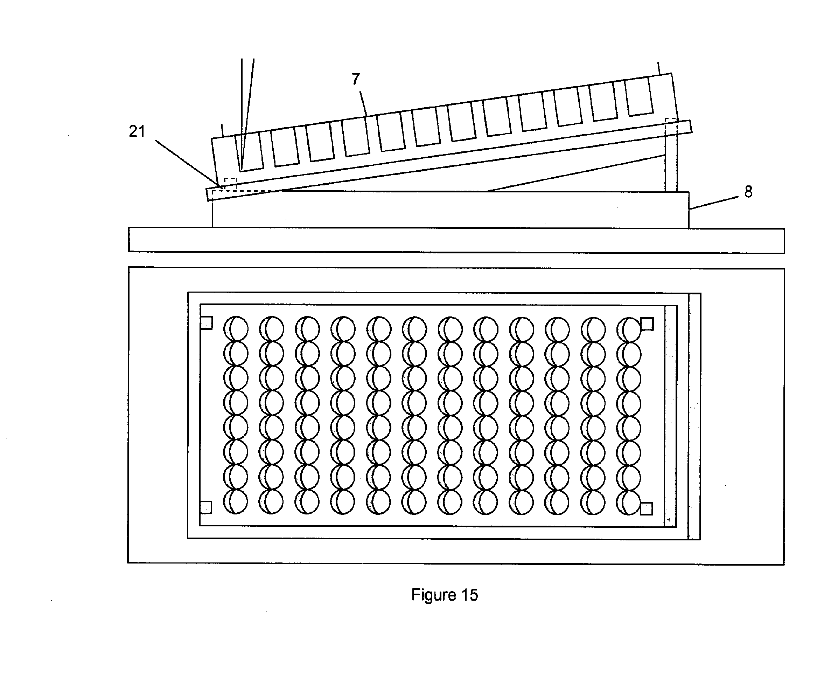

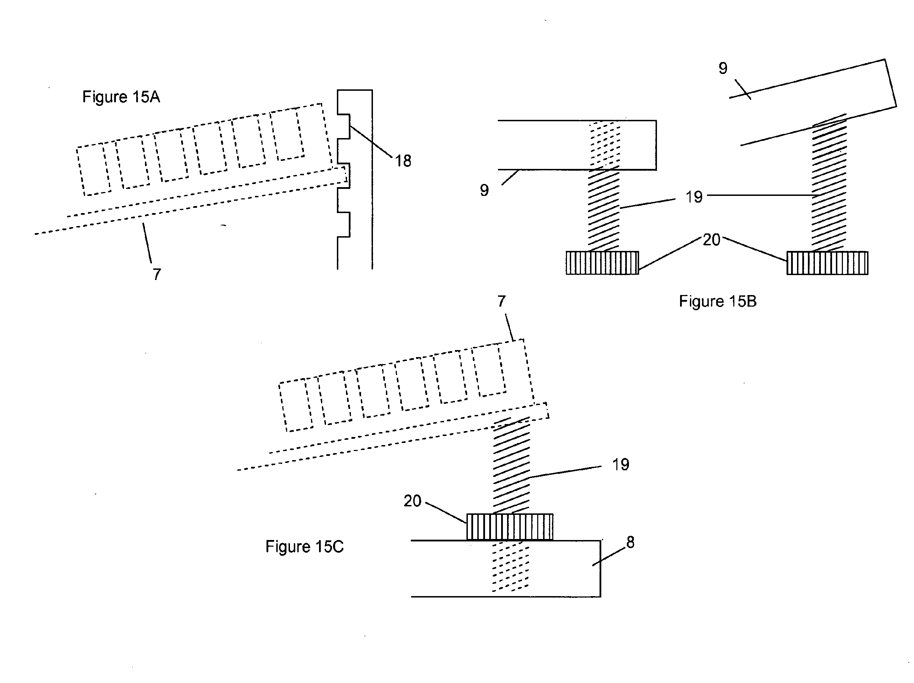

In Figure 15, the base portion of the microplate holder has a raised area or protrusion 21. One end of the microplate 7 is located over the raised area 21. This secures the microplate in one position and also prevents lateral movement.

Figure 15A shows an alternative means for inclining the microplate, comprising a leg comprising indentations 18, into which an edge of the microplate 7 can be located.

Figures 15B and 15C show alternative means for inclining the microplate. Figure 15B shows a screw, 19, which inserts into the underside of a platform of a microplate holder according to the present invention 9, and which can be adjusted using the nut, 20, which can be located on a surface such as a lab bench once adjustment is complete. When the nut is twisted, it engages or disengages the end of screw 19 from the platform 9, thus raising or lowering one end of the microplate.

Figure 15C shows a screw 19, which has one end located in the base portion 8 of a microplate holder in accordance with the present invention, and an opposite end onto which the underside of microplate 7 can be located. The height of the screw 19 can be adjusted using the nut 20 which, when twisted, engages or disengages the end of screw 19 from the base portion 8 thus raising or lowering the end of the microplate 7.

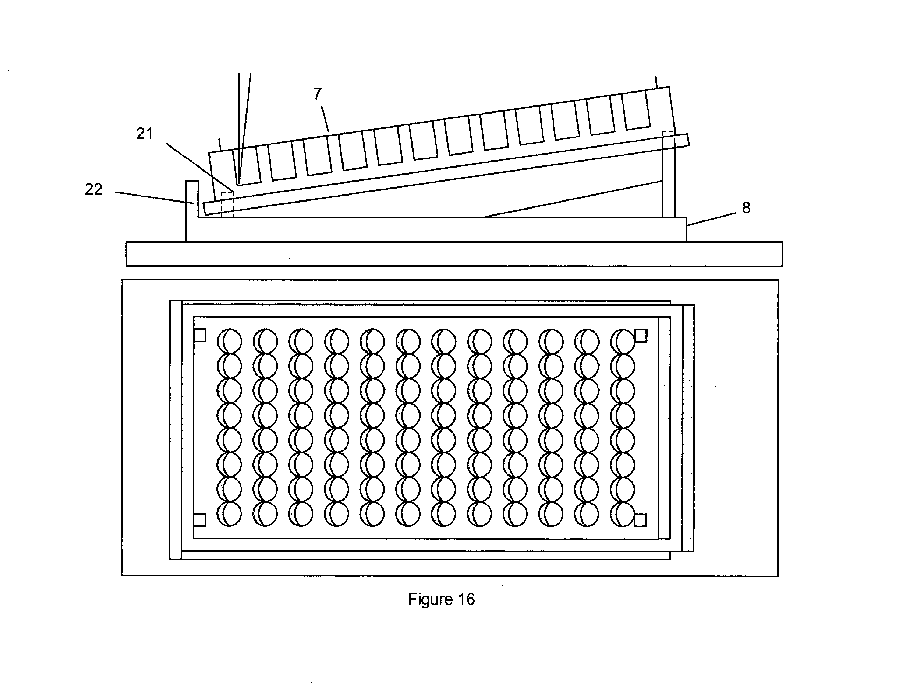

Figure 16 shows a further alternative embodiment of a microplate holder according to a second aspect of the present invention. A raised area 21 located on the base portion 8 of the microplate holder protrudes into the base of the microplate 7. An additional feature is a further raised area 22 on the microplate holder. This ensures the microplate does not slip forward.

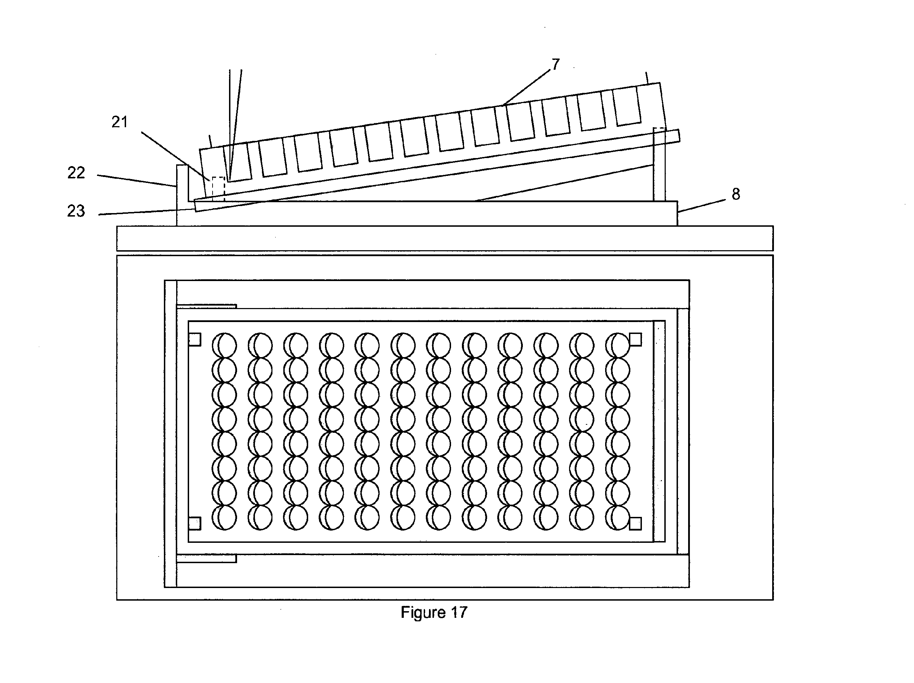

Figure 17 shows a further alternative embodiment of a microplate holder according to a second aspect of the present invention. A raised area 21 located on the base portion 8 of the microplate holder protrudes into the base of the microplate 7, and the holder comprises a further raised area 22. In addition, the microplate holder comprises an indentation 23 in which an edge of the microplate 7 is placed. This provides stability, and restricts of movement by the microplate 7.

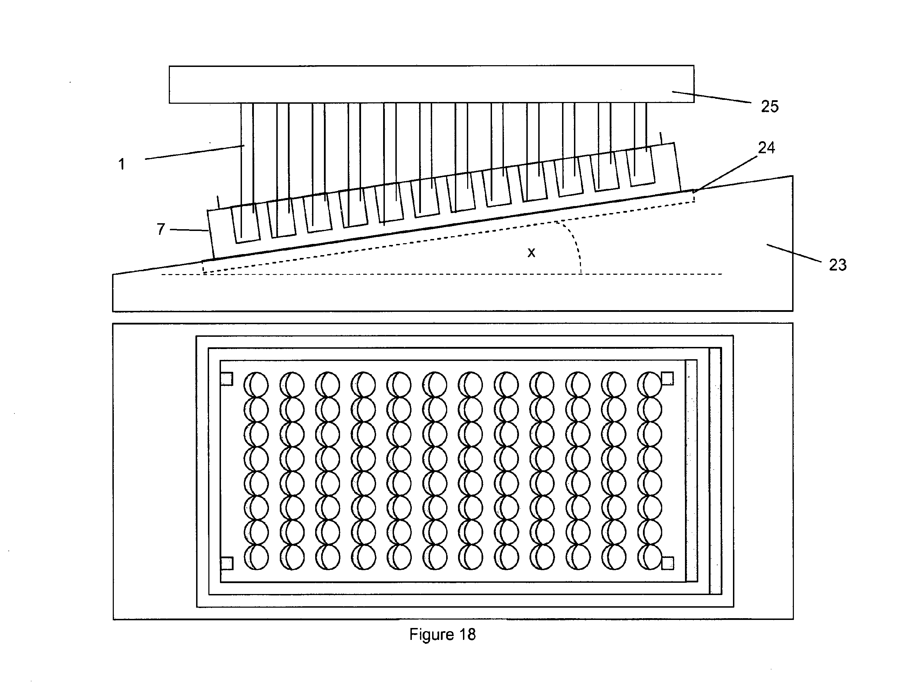

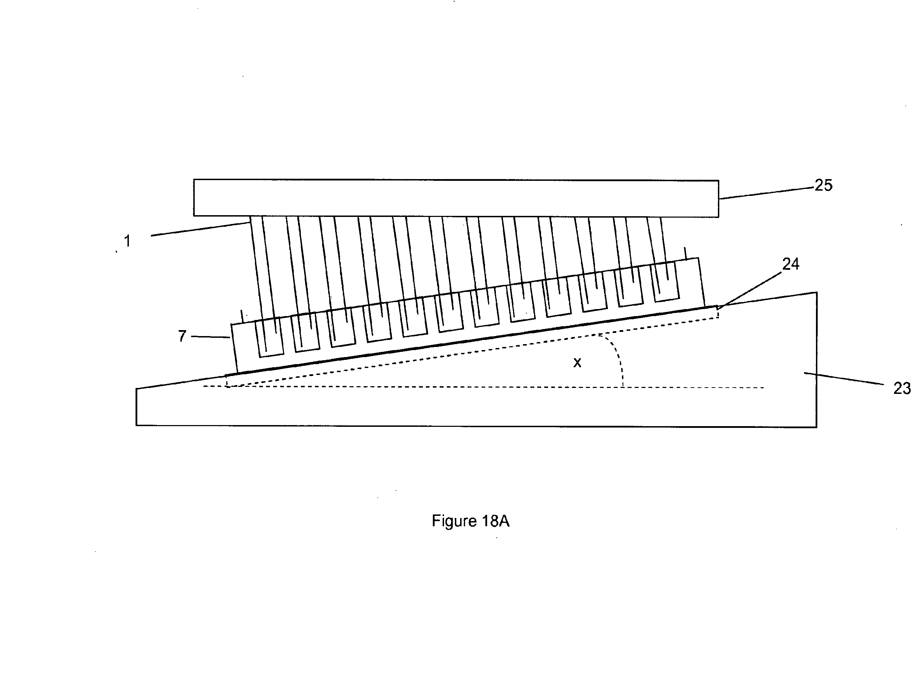

Figure 18 shows an embodiment of a microplate holder according to the present invention in an automated system. A microplate holder 23 maintains the microplate 7 at a fixed angle, x. The microplate holder comprises an indentation 24 into which the base of the microplate is located. The automated microplate washer head 25 has pairs of pipette tips 1, each pair comprising two pipette tips of differing lengths, tailored for use with the present invention. The length of the pairs of pipette tips decreases across the microplate, to compensate for the angle the microplate is held at by the microplate holder. The microplate washer head 25 remains horizontal, and moves in a lateral and/or vertical direction, so that it is located over, and raised and lowered over the inclined plate to allow aspiration and dispensing of fluid by the pipette tips.

Figure 18A shows an alternative washer head for use in an automated system. A microplate holder according to a first aspect of the present invention 23 maintains the microplate 7 at a fixed angle, x. The microplate holder comprises an indentation 24 into which the base of the microplate is located. The washer head 25 has pairs of angled pipette tips or pins 1, each pair comprising two pipette tips of differing lengths. The length of the pairs of pipette tips decreases across the microplate. The microplate washer head 25 remains horizontal, but is capable of lateral movement so that it can be positioned accurately over the inclined plate. The washer head is also capable of vertical movement (either perpendicularly to the horizontal, or at an angle to the horizontal so that the upward and downward motion is 'diagonal'), so that it can be raised and lowered in order to locate the pipette tips in the microplate wells, in order to effect aspiration from and release of fluid to the wells.

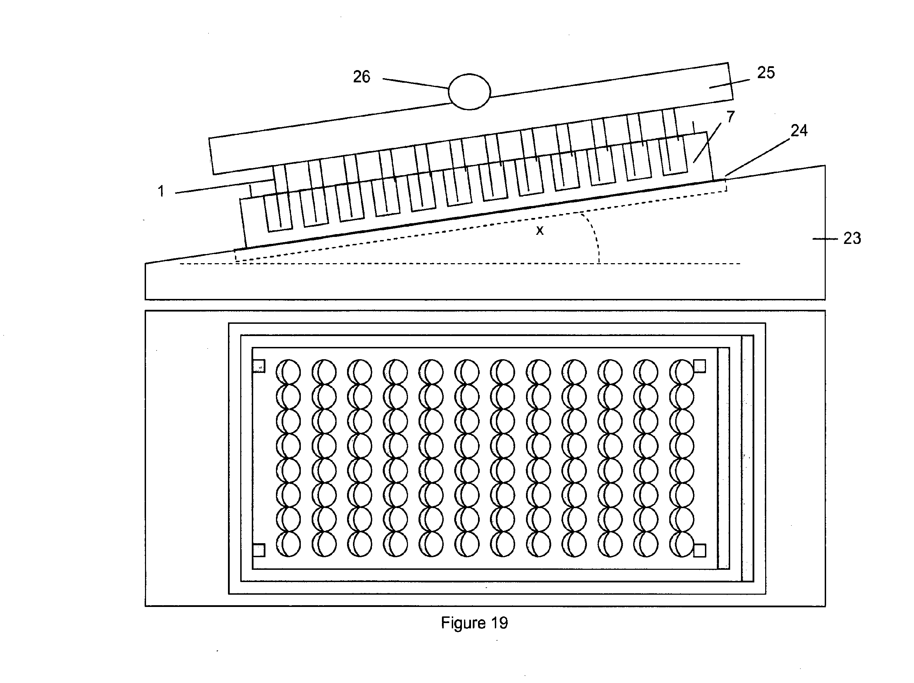

Figure 19 demonstrates a further variation in the washer head in an automated system. A microplate holder 23 maintains the microplate 7 at a fixed angle, x. The microplate holder comprises an indentation 24 into which the base of the microplate is located. The automated microplate washer head 25 has pairs of pipette tips 1, each pair comprising two pipette tips of differing lengths for aspirating and dispensing fluid. The microplate washer head 25 is rotated to an angle which is substantially the same as the angle of inclination of the microplate by a pin 26, in order to compensate for the angle that the microplate is held at by the microplate holder. The microplate washer head 25 also moves in a vertical direction, so that it is raised and lowered over the inclined plate to aspirate and dispense fluid

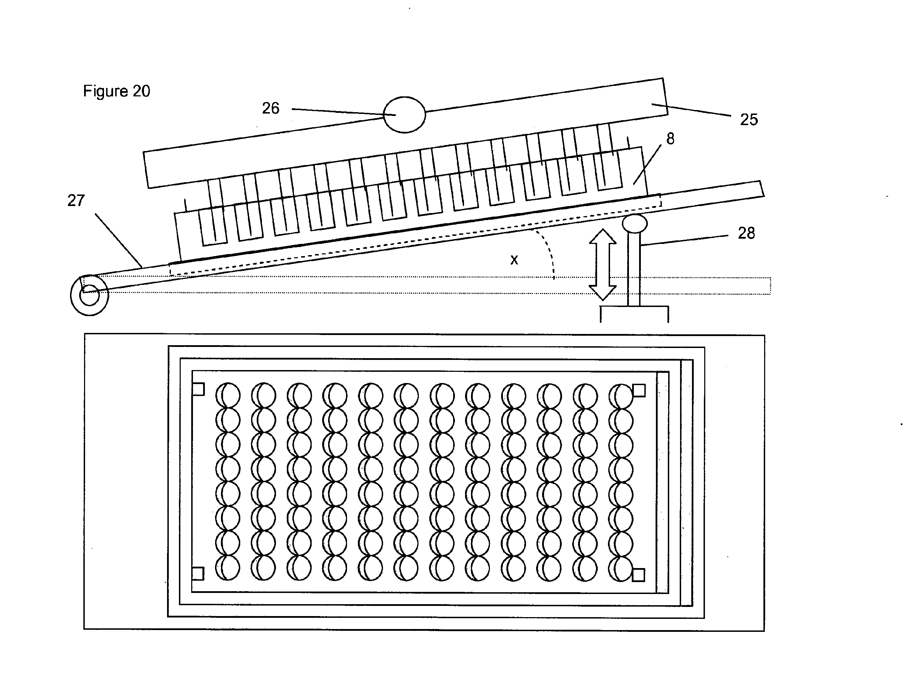

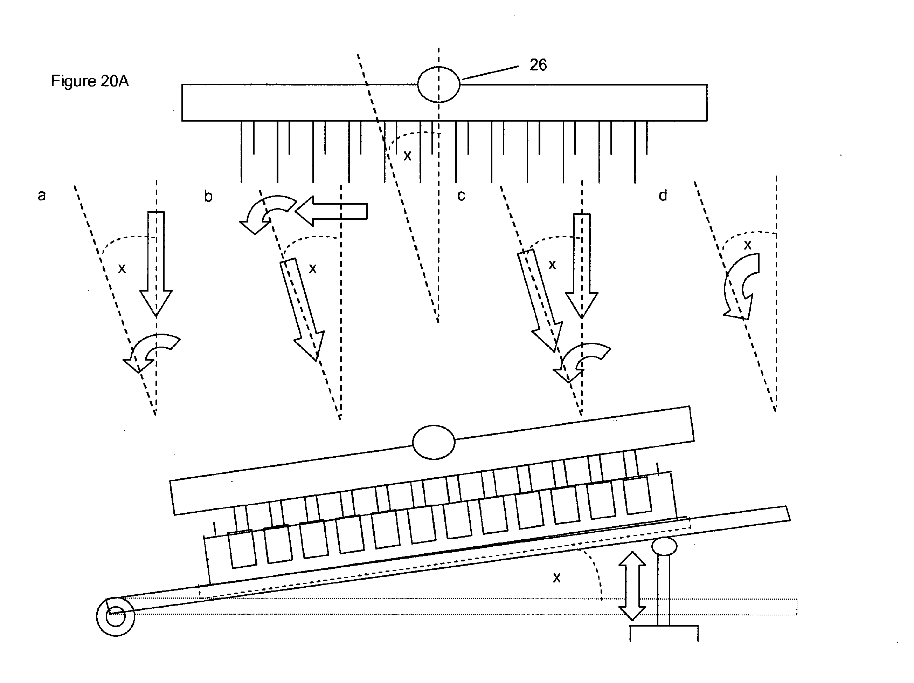

Figure 20 shows an embodiment of a device according to the third aspect of the present invention. The device comprises a plate 27 which makes up a conveyor, one end of which is raised or lowered by piston-driven arms 28 to the required angle x for aspiration and dispensing of fluid by the pipette tips. The microplate washer head 25 is rotated to the required angle about pin 26. The washer head is also capable of lateral and/or vertical movement, so that it can be positioned accurately over the inclined plate, and lowered and raised (either perpendicularly to the horizontal; or at an angle to the horizontal so that the upward and downward motion is 'diagonal') over the microplate in order to aspirate and dispense fluid.

Figure 20A illustrates the ways in which a washer head in an automated system may be manipulated in order to communicate with a microplate inclined to the desired angle, x by a device according to a third aspect of the invention. In a, the washer head is lowered down a vertical axis, and then rotated into position to communicate with the microplate. In b, the washer head moves horizontally until it is located over the microplate, rotated to the required angle, and is then lowered down a diagonal axis to communicate with the microplate. In c, the washer head is lowered vertically, rotated to the required angle and then moved down a diagonal axis to communicate with the microplate. In d, the washer head is lowered down a vertical axis, and during this motion, it is rotated to allow it to communicate with the inclined microplate.

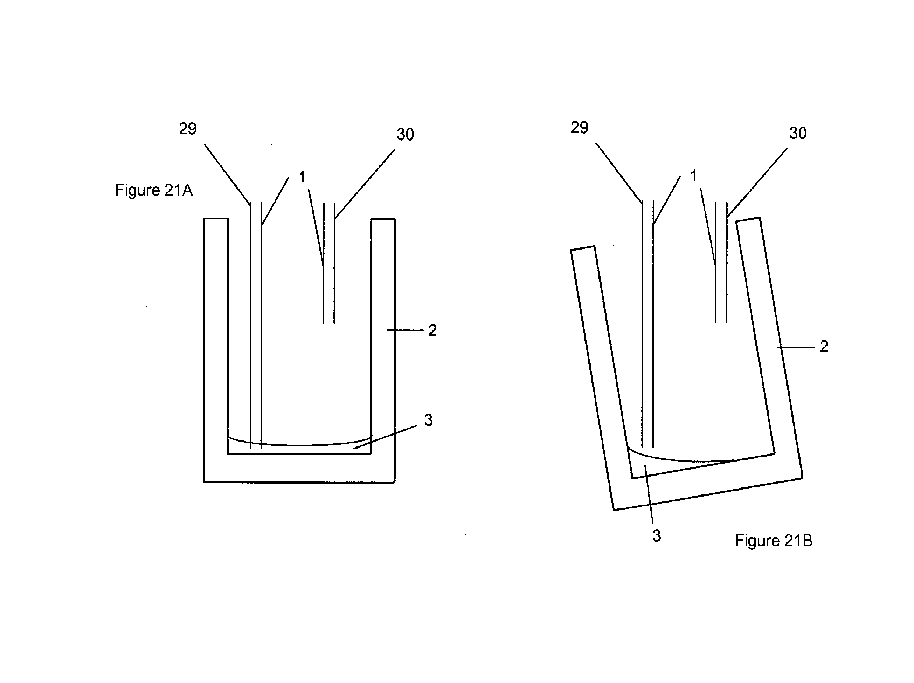

Figure 21A shows a pair of washer pins as used on a standard washer head in an automated system, comprising a dispensing tip 30 and an aspirating tip 29, which are arranged for insertion into a microplate well, 2, to aspirate fluid located therein 3.

Figure 21B shows the arrangement of a pair of washer pins as used on a standard washer head when the microplate is inclined.

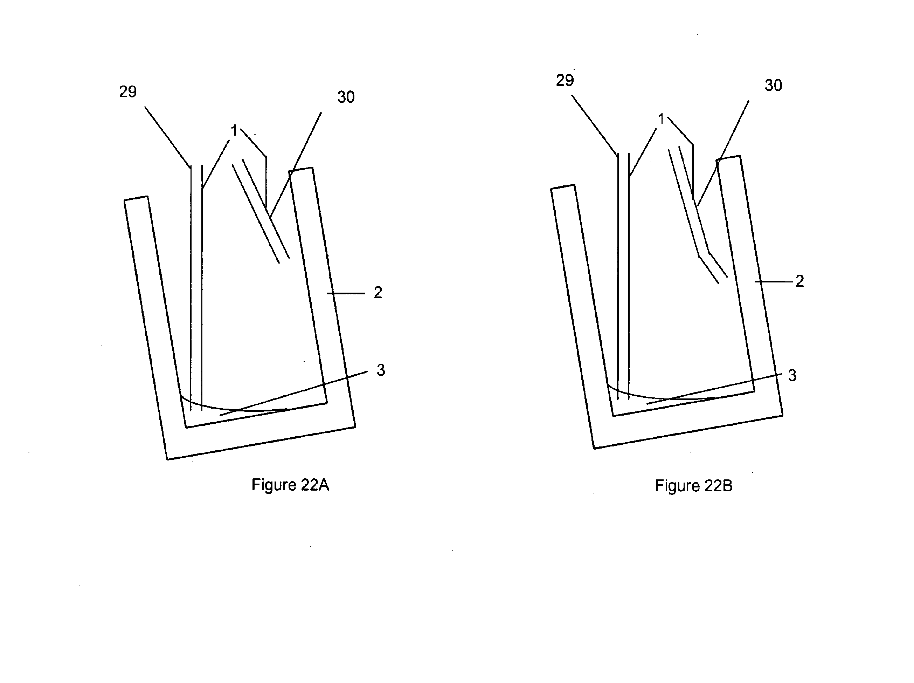

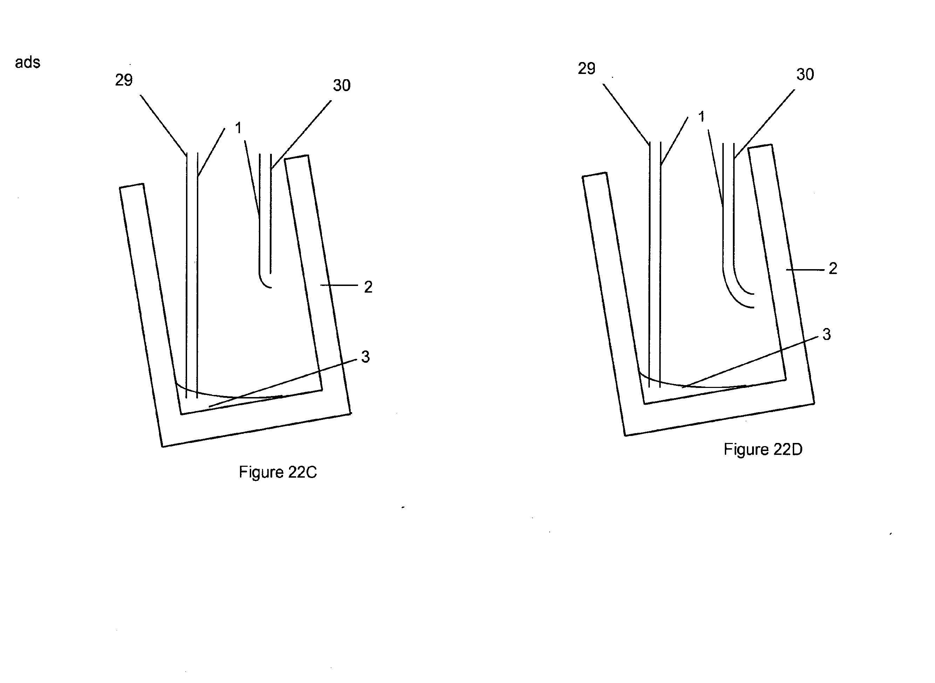

Figures 22A to 22D show pairs of bespoke washer pins in accordance with a second aspect of the present invention. In Figures 22A and B, the dispensing tip 30 and aspirating tip 29 are angled away from each other. In Figures 22B-D, the dispensing tip 30 comprises a bend or 'kink', so that the end of the tip is directed towards the internal wall of the microplate well.

Figure 23 demonstrates the effect of holding a microplate in accordance with the first aspect of the present invention in an inclined position, in order to provide a method for improved introduction or removal of fluid from a microplate well in accordance with the sixth aspect of the present invention. In Figures 23A, a pipette tip 1 is introduced to a microplate well 2 which contains a monolayer of adherent cells 7, via a guide channel 4, which terminates in an indentation 5, in accordance with a first aspect of the present invention. The well has a raised area 6 located on the well base. The indentation 5 and the raised area 6 are spaced so that the edges of the pipette tip 1 can be located in the indentation 5 and on the raised area 6. Contact with the well base is, therefore, avoided.

In Figure 23B, a pipette tip 1 is introduced into a well of a microplate 2 via a raised guide channel 13 in accordance with the first aspect of the present invention, which is being held, at a desired angle, x, by a microplate holder in accordance with a second aspect of the present invention. The microplate holder comprises a base portion 8, a means for inclining the microplate in the form of an inclined platform 9, and a means for securing the microplate to the platform in the form of two raised outer edges 10 on the platform 9 which have an overhang 11, forming a groove into which the lip of the microplate fits, thereby presenting lateral or upward movement of the microplate. The microplate is slid into position on the platform by communication with the internal surfaces of the raised outer edges. The microplate further comprises holes into which securing pins, 12, which can be inserted once the microplate is in position, in order to prevent lateral movement of the plate.

In Figure 23C, a pipette tip 1 is introduced into a well of a microplate 2 via a indented guide channel 14 in accordance with the first aspect of the present invention, which is being held at a desired angle, x, by a microplate holder in accordance with a second aspect of the present invention. The microplate holder comprises a base portion 8, a means for inclining the microplate in the form of an inclined platform 9, and a means for securing the microplate to the platform in the form of two raised outer edges 10 on the platform 9 which have an overhang 11, forming a groove into which the lip of the microplate fits, thereby preventing lateral or upward movement of the microplate. The microplate is slid into position on the platform by communication with the internal surfaces of the raised outer edges. The microplate further comprises holes into which securing pins, 12, which can be inserted once the microplate is in position, in order to prevent lateral movement of the plate.

## Claims

1. A microplate (7) comprising a plurality of open wells (2), wherein one or more of the wells comprises an area for communication with the tip (1) of a pipette which provides a point of contact between the dispensing end of the pipette tip and the microplate well in use, wherein the area for communication with the pipette tip is located at the junction between the base of the well and the wall of the well and wherein the area for communication with the pipette tip comprises one or more raised areas or protrusions (6) located on the base and/or wall of the well interior, and/or one or more recesses or indentations (5) in the wall and/or base of the well; and wherein the area for communication with the pipette tip is such that, in use, the dispensing end of the pipette tip bridges the gap between a point on the base of the microplate well and a point on the wall of the microplate well to create a channel for aspiration and dispensing of fluid.

**2.** A microplate as claimed in claim 1, wherein the area(s) for communication with the pipette tip comprise means for preventing lateral movement of the pipette tip.

**3.** A microplate as claimed in claim 2, wherein the area for communication with the pipette tip comprises one or more raised areas (6) upon which the pipette tip can be substantially located, and one or more additional raised areas (6) against or between which the pipette tip can be located in order to prevent lateral movement of the pipette tip, or wherein the means for preventing lateral movement of the pipette tip comprises one or more indentations (5).

**4.** A microplate as claimed in any of claims 1-3, wherein two or more of the raised areas forming the area for communication with the pipette tip are located at a distance from each other which is comparable to the diameter of an appropriately sized pipette tip for an assay using the microplate.

**5.** A microplate as claimed in any of claims 1-4, wherein the one or more wells further comprises a guide channel (4), preferably wherein the guide channel is configured to accommodate a pipette tip of a size appropriate for an assay using the microplate.

**6.** A microplate as claimed in claim 5, wherein the guide channel (4) comprises an indentation in the interior wall of the well, or one or more raised areas on the interior wall of the well, and/or wherein the guide channel terminates in an indentation in the wall of the microplate well.

**7.** A system comprising a combination of a microplate (7) according to any of claims 1-6 and a microplate holder (23), wherein the microplate holder comprises a means (9) for inclining a microplate, so that the microplate is positioned so that one aspect, side or edge of the microplate is vertically raised relative to another aspect, side or edge of the microplate.

**8.** A system as claimed in claim 7, wherein the microplate is at an angle from its conventional horizontal orientation, preferably wherein the angle of inclination of the microplate is at least 5° and no greater than 20°.

**9.** A system as claimed in claims 7 or 8, wherein the means for inclining the microplate is fixed at a pre-determined angle of inclination or it provides a single predetermined angle of inclination when in use, or wherein the means for inclining the microplate is adjustable, so that the microplate may be moved from a substantially horizontal position to a desired angle of inclination, preferably wherein the means for inclining the microplate comprises a support of adjustable height or a support which may engage with different parts of the microplate to produce a variable angle of inclination.

**10.** A system as claimed in any one of claims 7-9, wherein the means (9) of inclining the microplate comprises an inclined platform on which the microplate is to be located, or a support such as one or more rotating legs, telescopic legs or piston arrangements.

**11.** A system as claimed in any of claims 7-10, further comprising a means for engaging the microplate, preferably wherein the engaging means is one or more raised areas or protrusions (21) or one or more indentations or recesses (18) on the microplate holder, which engage with the microplate to restrict the relative movement of the microplate (7) and microplate holder (23).

**12.** A system as claimed in any one of claims 7-11, further comprising a locking means to securely engage the microplate, preferably wherein the locking means is one or more securing clips (12) located on the microplate holder.

**13.** A system as claimed in any one of claims 7-12, further comprising a means of stabilizing the microplate holder, preferably wherein the means of stabilizing the microplate holder comprises one or more handles (9').

14. An automated microplate device comprising a system according to any one of claims 7-13.

15. An automated microplate device as claimed in claim 14, further comprising a microplate washer head (25) which can be raised and lowered and/or rotated for interaction with a microplate (7) in an inclined position, preferably wherein the microplate washer head comprises bespoke pairs of aspiration and dispensing pins (1).


**Patentansprüche**

1. Eine Mikroplatte (7), die eine Vielzahl von offenen Vertiefungen umfasst (2), wobei eine oder mehr Vertiefungen einen Bereich zur Kommunikation mit der Spitze (1) einer Pipette umfasst, die einen Kontaktpunkt zwischen dem abgebenden Ende der Pipettenspitze und der benutzten Mikroplattenvertiefung bereitstellt, wobei der Bereich zur Kommunikation mit der Pipettenspitze sich an der Verbindungsstelle zwischen dem Boden der Vertiefung und der Wand der Vertiefung befindet und wobei der Bereich zur Kommunikation mit der Pipettenspitze einen oder mehrere erhöhte Bereiche oder Ausbuchtungen (6) umfasst, die sich am Boden und/oder der Wand des Inneren der Vertiefung befinden, und/oder eine oder mehrere Einbuchtungen oder Einkerbungen (5) in der Wand und/oder dem Boden der Vertiefung umfasst, und wobei der Bereich zur Kommunikation mit der Pipettenspitze so ausgelegt ist, dass bei der Benutzung das abgebende Ende der Pipettenspitze die Lücke zwischen einem Punkt auf dem Boden der Vertiefung der Mikroplatte und einem Punkt auf der Wand der Vertiefung der Mikroplatte überbrückt, um einen Aspirationskanal zu erzeugen und die Abgabe von Flüssigkeit zu ermöglichen.

2. Eine Mikroplatte gemäß Anspruch 1, wobei der/die Bereich(e) zur Kommunikation mit der Pipettenspitze Mittel aufweist, um eine seitliche Bewegung der Pipettenspitze zu vermeiden.

3. Eine Mikroplatte gemäß Anspruch 2, wobei der Bereich zur Kommunikation mit der Pipettenspitze einen oder mehrere erhöhte Bereiche (6), auf denen sich die Pipettenspitze im Wesentlichen befinden kann, und einen oder mehrere erhöhte Bereiche (6) umfasst, gegenüber oder zwischen denen sich die Pipettenspitze befinden kann, um eine seitliche Bewegung der Pipettenspitze zu vermeiden, oder wobei die Mittel zur Vermeidung der seitlichen Bewegung der Pipettenspitze einen oder mehrere Einkerbungen (5) umfasst.

4. Eine Mikroplatte gemäß einem der Ansprüche 1-3, wobei zwei oder mehrere der erhöhten Bereiche, welche den Bereich zur Kommunikation mit der Pipettenspitze bilden, sich in einem Abstand voneinander befinden, der mit dem Durchmesser einer Pipettenspitze von angemessener Größe für ein Assay mittels der Mikroplatte vergleichbar ist.

5. Eine Mikroplatte gemäß einem der Ansprüche 1-4, wobei eine oder mehrere Vertiefungen zudem einen Führungskanal (4) umfassen, wobei der Führungskanal vorzugsweise konfiguriert ist, um eine Pipettenspitze von angemessener Größe für ein Assay mittels der Mikroplatte aufzunehmen.

6. Eine Mikroplatte gemäß Anspruch 5, wobei der Führungskanal (4) eine Einkerbung in der Innenwand der Vertiefung oder einen oder mehrere erhöhte Bereiche auf der Innenwand der Vertiefung umfasst und/oder wobei der Führungskanal in einer Einkerbung in der Wand der Vertiefung der Mikroplatte endet.

7. Ein System bestehend aus einer Kombination einer Mikroplatte (7) gemäß einem der Ansprüche 1-6 und einem Mikroplattenhalter (23), wobei der Mikroplattenhalter ein Mittel (9) zur Neigung einer Mikroplatte umfasst, sodass die Mikroplatte so positioniert ist, dass eine Komponente, Seite oder Ecke der Mikroplatte im Verhältnis zu einer anderen Komponente, Seite oder Ecke der Mikroplatte vertikal erhöht ist.

8. Ein System gemäß Anspruch 7, wobei die Mikroplatte sich in einem Winkel gegenüber ihrer konventionellen horizontalen Ausrichtung befindet, wobei der Neigungswinkel der Mikroplatte vorzugsweise mindestens 5° und nicht größer als 20° ist.

9. Ein System gemäß einem der Ansprüche 7 oder 8, wobei das Mittel zur Neigung der Mikroplatte bei einem vorgegebenen Neigungswinkel befestigt ist, oder es bei Anwendung einen einzelnen vorgegebenen Neigungswinkel bereitstellt, oder wobei das Mittel zur Neigung der Mikroplatte einstellbar ist, so dass die Mikroplatte von einer im Wesentlichen horizontalen Position auf einen gewünschten Neigungswinkel bewegt werden kann, wobei das Mittel zur Neigung der Mikroplatte vorzugsweise eine Auflage mit verstellbarer Höhe oder eine Auflage umfasst, die in verschiedene Teile der Mikroplatte einrastet, um einen variablen Neigungswinkel zu erzeugen.

**10.** Ein System gemäß einem der Ansprüche 7-9, wobei das Mittel (9) zur Neigung der Mikroplatte eine geneigte Plattform, auf der sich die Mikroplatte befinden soll, oder eine Auflage umfasst, wie einen oder mehrere rotierende Beine, Teleskopbeine oder Kolbenvorrichtungen.

**11.** Ein System gemäß einem der Ansprüche 7-10, das außerdem ein Mittel zum Einrasten der Mikroplatte umfasst, wobei das Einrastmittel einen oder mehrere erhöhte Bereiche oder Ausbuchtungen (21) oder eine oder mehrere Einkerbungen oder Einbuchtungen (18) auf dem Mikroplattenhalter umfasst, die in die Mikroplatte einrasten, um die relative Bewegung der Mikroplatte (7) und des Mikroplattenhalters (23) einzuschränken.

**12.** Ein System gemäß einem der Ansprüche 7-11, das außerdem ein Verriegelungsmittel umfasst, um die Mikroplatte sicher einzurasten, wobei das Verriegelungsmittel vorzugsweise eine oder mehrere auf der Mikroplatte befindliche Befestigungsklammern (12) ist.

**13.** Ein System gemäß einem der Ansprüche 7-12, das außerdem ein Stabilisierungsmittel für den Mikroplattenhalter umfasst, wobei das Stabilisierungsmittel der Mikroplatte einen oder mehrere Griffe (9') umfasst.

**14.** Eine automatische Mikroplattenvorrichtung, das ein System gemäß einem der Ansprüche 7-13 umfasst.

**15.** Eine automatische Mikroplattenvorrichtung gemäß Anspruch 14, das außerdem einen Mikroplatten-Waschkopf (25) umfasst, der zur Interaktion mit einer Mikroplatte (7) in einer geneigten Position erhöht und gesenkt und/oder rotiert werden kann, wobei der Mikroplatten-Waschkopf vorzugsweise maßgeschneiderte Paare von Stiften zur Aspiration und Abgabe (1) umfasst.

**Revendications**

**1.** Une microplaque (7) comportant plusieurs puits ouverts (2), où l'un ou plusieurs des puits comporte un espace pour la communication avec l'embout (1) d'une pipette qui fournit un point de contact entre le côté distributeur de l'embout de la pipette et le puits de la microplaque utilisée, où la zone de communication avec l'embout de la pipette est située à la jonction entre le fond du puits et la paroi du puits et où la zone de communication avec l'embout de la pipette comporte une ou plusieurs zones surélevées ou saillies (6) situées sur la base et/ou la paroi intérieure du puits et/ou une ou plusieurs encoches ou dentelures (5) dans la paroi et/ou le fond du puits ; et où la zone de communication avec l'embout de la pipette est telle que, lors de son utilisation, le côté distributeur de l'embout de la pipette comble l'écart entre un point du fond du puits de la microplaque et un point de la paroi du puits de la microplaque pour créer une canal pour l'aspiration et la distribution de fluide.

**2.** Une microplaque selon la revendication 1, où la(les) zone(s) de communication avec l'embout de la pipette comporte(nt) des dispositifs pour empêcher un mouvement latéral de l'embout de la pipette.

**3.** Une microplaque selon la revendication 2, où la zone de communication avec l'embout de la pipette comporte une ou plusieurs zones en relief (6) sur lesquelles l'embout de la pipette peut reposer en grande partie, et une ou plusieurs autres zones en relief (6) contre ou entre lesquelles l'embout de la pipette peut reposer de manière à empêcher un mouvement latéral de l'embout de la pipette, ou dans laquelle les dispositifs pour empêcher un mouvement latéral de l'embout de la pipette comportent une ou plusieurs dentelures (5).

**4.** Une microplaque selon l'une des revendications 1 à 3, où deux ou plusieurs des zones en relief formant la zone de communication avec l'embout de la pipette sont situées à une distance l'une de l'autre qui soit comparable au diamètre d'un embout de pipette de taille adaptée à un essai à l'aide de la microplaque.

**5.** Une microplaque selon l'une des revendications 1 à 4, où un ou plusieurs puits comportent en plus un canal de guidage (4), de préférence où le canal de guidage est configuré pour s'adapter à un embout de pipette d'une taille adaptée à un essai à l'aide de la microplaque.

**6.** Une microplaque selon la revendication 5, où le canal de guidage (4) comporte une dentelure dans la paroi intérieure du puits, ou une ou plusieurs zones plus élevées sur la paroi intérieure du puits, et/ou dans laquelle le canal de guidage se termine en une dentelure dans la paroi du puits de la microplaque.

**7.** Un système comprenant une combinaison d'une microplaque (7) selon l'une des revendications 1 à 6 et un support de microplaque (23), où le support de microplaque comporte un moyen (9) d'incliner une microplaque de façon à ce que la microplaque soit positionnée de telle sorte qu'un côté ou qu'un bord de la microplaque soit soulevé verticalement par rapport à un autre côté ou bord de la microplaque.

8. Un système selon la revendication 7, où la microplaque est à un angle par rapport à son orientation horizontale conventionnelle, de préférence où l'angle d'inclinaison de la microplaque est au moins de 5° et au plus de 20°.

9. Un système selon la revendication 7 ou 8, où les dispositifs pour incliner la microplaque sont fixés à un angle d'inclinaison prédéterminé ou bien où il donne un angle d'inclinaison prédéterminé unique lors de son utilisation, ou dans lequel les dispositifs pour incliner la microplaque sont réglables, de sorte que la microplaque puisse être déplacée d'une position en grande partie horizontale à un angle d'inclinaison souhaité, de préférence où les dispositifs pour incliner la microplaque comportent un support réglable en hauteur ou un support qui puisse venir en prise avec différentes parties de la microplaque afin de produire un angle d'inclinaison variable.

10. Un système selon l'une des revendications 7 à 9, où les dispositifs (9) d'inclinaison de la microplaque comportent une plate-forme inclinée sur laquelle la microplaque doit être placée, ou bien un support tel qu'une ou plusieurs pattes pivotantes, pattes télescopiques ou un ensemble de vérins.

11. Un système selon l'une des revendications 7 à 10, comportant en outre un dispositif pour mettre en prise la microplaque, de préférence où les dispositifs de mise en prise sont une ou plusieurs zones soulevées ou saillies (21) ou bien une ou plusieurs encoches ou dentelures (18) sur le support de la microplaque, venant en prise avec la microplaque afin de restreindre le mouvement relatif de la microplaque (7) et du support de la microplaque (23).

12. Un système selon l'une des revendications 7 à 11, comportant en outre un dispositif de blocage pour mettre en prise la microplaque en toute sécurité, de préférence où le dispositif de blocage est un ou plusieurs clips de fixation (12) situés sur le support de la microplaque.

13. Un système selon l'une quelconque des revendications 7 à 12, comportant en outre un dispositif pour stabiliser le support de la microplaque, de préférence où les dispositifs de stabilisation du support de la microplaque comportent une ou plusieurs poignées (9').

14. Un dispositif de microplaque automatique comportant un système selon l'une des revendications 7 à 13.

15. Un dispositif de microplaque automatique selon la revendication 14, comportant en outre une tête de lavage de microplaque (25) pouvant être soulevée et abaissée et/ou pouvant pivoter pour une interaction avec une microplaque (7) en position inclinée, de préférence où la tête de lavage de microplaque comporte une paire de broches sur mesure pour l'aspiration et la distribution (1).

Figure 1A

Figure 1B

Figure 2A

Figure 2B

Figure 3A

Figure 3B

Figure 3C

Figure 3D

Figure 3E

Figure 3F

Figure 4A

Figure 4B

Figure 4C

Figure 4D

Figure 5A

Figure 5B

Figure 5C

Figure 5D

Figure 5E

Figure 5F

Figure 5G

Figure 5H

Figure 5I

Figure 5J

Figure 5K

Figure 5L

Figure 5M

Figure 5N

Figure 5O

Figure 6A

Figure 6B

Figure 6C

Figure 6D

Figure 7A

Figure 7B

Figure 8A

Figure 8B

EP 2 459 313 B1

Figure 9A

Figure 9B

Figure 9C

Figure 9A

Figure 9B

Figure 9C

42

Figure 10

Figure 11A

Figure 11B

Figure 11C

Figure 11D

Figure 11E

Figure 11F

Figure 12

Figure 12A

Figure 13

Figure 14A

Figure 14B

Figure 14C

EP 2 459 313 B1

Figure 15

Figure 15A

Figure 15B

Figure 15C

Figure 16

Figure 17

Figure 18

EP 2 459 313 B1

Figure 18A

Figure 19

Figure 20

Figure 20A

EP 2 459 313 B1

30

1

29

2

3

Figure 21B

30

1

29

2

3

Figure 21A

Figure 22B

Figure 22A

Figure 22D

Figure 22C

Figure 23A

Figure 23B

Figure 23C

## REFERENCES CITED IN THE DESCRIPTION

**Patent documents cited in the description**

- US 20070009396 A
- WO 200701855 A
- US 20090010811 A
- WO 9920394 A
- US 7326385 B
- US 5017341 A

**Non-patent literature cited in the description**

- **MCDERMOTT et al.** *PNAS,* 2007, vol. 104 (50), 19936-19941
- **ZHANG et al.** *J Biomol Screen.,* 1999, vol. 4 (2), 67-73
- **FRIEDRICH et al.** *Nature Protocols,* 2009, vol. 4 (3), 309-324
- **VICHAI ; KIRTIKARA.** *Nature Protocols,* 2009, vol. 1 (3), 1112-1116
- Developing Robust High Content Assays. High Content Screening - Science, Techniques, and Application. 98